# EUROPEAN PATENT APPLICATION

(11) **EP 4 717 574 A1**
(43) Date of publication of application: **01.04.2026**
(21) Application number: 24831057.5
(22) Date of filing: 28.06.2024
(51) Int. Cl.: B62K 5/01, F02B 29/04, F02B 37/16, F02M 35/104

(54) **ALL-TERRAIN VEHICLE**

(30) Priority: 30.06.2023 CN 202310801973
(71) Applicant: Zhejiang CFMOTO Power Co., Ltd., Hangzhou, Zhejiang 311199 (CN)
(72) Inventor: YANG, Chen, Hangzhou, Zhejiang 311199 (CN); GUAN, Li, Hangzhou, Zhejiang 311199 (CN); DUAN, Wenbing, Hangzhou, Zhejiang 311199 (CN); WANG, Jianchong, Hangzhou, Zhejiang 311199 (CN); GAN, Chuanwei, Hangzhou, Zhejiang 311199 (CN); WANG, Jian, Hangzhou, Zhejiang 311199 (CN)
(74) Representative: Sun, Yiming
(86) International application number: PCT/CN2024/102709
(87) International publication number: WO 2025/002433

(57) **Abstract**

The application provides an all-terrain vehicle, which includes a frame, a vehicle body cover, a prime mover assembly, and a wheel system. The vehicle body cover is at least partially arranged on the frame. The prime mover assembly includes an engine, the engine comprises an intake assembly and a throttle assembly connected to the intake assembly, and further comprises a turbocharger assembly connected to the intake assembly; and a wheel system connected to the engine in a transmission mode. The all-terrain vehicle and the prime mover assembly both have a compact structure and a strong power.

## Description

### RELATED APPLICATION INFORMATION

The present application claims the benefit of priority to Chinese Patent Application No. 202310801973.4, entitled "all-terrain vehicle", filed with the Chinese Patent Office on June 30, 2025. The entire contents of the above-referenced application are incorporated herein by reference.

### FIELD OF THE DISCLOSURE

The present application relates to the field of vehicles, and particularly to an all-terrain vehicle.

### BACKGROUND OF THE DISCLOSURE

In existing technology, as an outdoor vehicle, all-terrain vehicles need to adapt to different scenarios and complex operating conditions. As a result, the engine of the all-terrain vehicle is required to possess a substantially high power capacity. Therefore, the engine must possess a substantially high power output. For an internal combustion engine, high power output means a large intake air volume and a correspondingly large exhaust volume. How to make the structure of all-terrain vehicles equipped with high-power engines compact is still urgently needed to be solved.

### SUMMARY OF THE INVENTION

The present embodiment provides an all-terrain vehicle to solve at least one problem existing in the background.

In a first aspect, an embodiment provides an all-terrain, the all-terrain includes a frame, a vehicle body cover, a prime mover assembly, and a wheel system. The vehicle body cover is at least partially arranged on the frame. The prime mover assembly includes an engine including an intake assembly, a first intake pipe, a second intake pipe, a turbocharger assembly, an intercooler, and a throttle assembly. The throttle assembly is connected to the intake assembly, the turbocharger assembly is connected to the intake assembly, the first intake pipe is connected to the turbocharger assembly, the turbocharger assembly is connected to the intercooler, and the intercooler is connected to the throttle assembly by the second intake pipe. The wheel system is connected to the engine in a transmission mode. The intercooler is arranged between the throttle assembly and the turbocharger assembly, and a mounting plane parallel to a horizontal plane is defined between the engine and the all-terrain vehicle. The intercooler is inclined relative to the mounting plane at an angle defined between the intercooler and the mounting plane greater than or equal to 80 degrees and less than or equal to 90 degrees. The engine further comprises an intake pressure relief system, the intake pressure relief system comprising a control device, a monitoring device, and an actuator. One end of the actuator is connected to the second intake pipe, and the other end of the actuator is connected to the first intake pipe, the monitoring device is used to monitor the air pressure value near the throttle assembly and to transmit the air pressure value to the control device. The control device presets a threshold value, when the air pressure value is greater than or equal to the threshold value, the control device controls the actuator arranged on the first intake pipe and the second intake pipe to be connected. When the air pressure value is less than the threshold value, the control device controls the actuator arranged on the first intake pipe and the second intake pipe to be closed.

In a second aspect, an embodiment provides an all-terrain vehicle, the all-terrain vehicle includes a frame, a vehicle body cover, a prime mover assembly, and a wheel system. The vehicle body cover is at least partially arranged on the frame. The prime mover assembly includes an engine, the engine includes an intake assembly and a throttle assembly connected to the intake assembly, and further includes a turbocharger assembly connected to the intake assembly. The wheel system is connected to the engine in a transmission mode. The engine also includes an intercooler. The intercooler is arranged between the throttle assembly and the turbocharger assembly, and a mounting plane parallel to a horizontal plane is defined between the engine and the all-terrain vehicle. The intercooler is inclined relative to the mounting plane at an angle defined between the intercooler and the mounting plane greater than or equal to 80 degrees and less than or equal to 90 degrees.

In a third aspect, an embodiment provides an all-terrain, the all-terrain includes a frame, a vehicle body cover, a prime mover assembly, and a wheel system. The vehicle body cover is at least partially arranged on the frame. The prime mover assembly includes an engine, wherein the engine includes an intake assembly, a throttle assembly, a turbocharger assembly, and an intake manifold. The throttle assembly is connected to the intake assembly, the turbocharger assembly is connected to the intake assembly, the intake manifold is connected to the turbocharger assembly. The wheel system is connected to the engine in a transmission mode. The engine also includes an intercooler. The intercooler is arranged between the throttle assembly and the turbocharger assembly, and a mounting plane parallel to a horizontal plane is defined between the engine and the all-terrain vehicle. The intercooler is inclined relative to the mounting plane at an angle defined between the intercooler and the mounting plane greater than or equal to 80 degrees and less than or equal to 90 degrees. The intake manifold includes an intake end, an exhaust end, and a plenum chamber, the plenum chamber includes an extension portion and is at least partially positioned between the intake end and the exhaust end. The exhaust end defines a first exhaust port, a second exhaust port, and a third exhaust port, the second exhaust port is defined between the first exhaust port and the third exhaust port, the extension portion extends to the end away from the first exhaust port and the third exhaust port.

Compared with related vehicles, the all-terrain vehicles provided in these embodiments have increased engine power and made its structure more compact through improvements in engine layout and structure.

The details of one or more embodiments of the present application are presented in the following figures and description to make other features, objectives, and advantages of the present application more concise and understandable.

### BRIEF DESCRIPTION OF THE DRAWINGS

FIG. 1 is a perspective view of an all-terrain vehicle of the present application;
FIG. 2 is a perspective view of a prime mover assembly of the present application;
FIG. 3 is an exploded view of an engine of the present application;
FIG. 4 is a perspective view of the engine of the present application;
FIG. 5 is a perspective view of a cylinder block of the engine of the present application;
FIG. 6 is a logic diagram of the knock sensor of the engine in the present application;
FIG. 7 is a top view of the cylinder block of the engine of the present application;
FIG. 8 is a sectional view of the cylinder block of the engine of the present application;
FIG. 9 is a perspective view of the intake assembly of the engine of the present application;
FIG. 10 is a sectional view of the partial structure of the intake assembly of the engine of the present application;
FIG. 11 is a perspective view of the filter assembly of the intake assembly of the engine of the present application;
FIG. 12 is an exploded view of the filter assembly of the intake assembly of the engine of the present application;
FIG. 13 is a perspective view of the intake manifold of the engine of the present application;
FIG. 14 is a sectional view of the intake manifold in FIG. 25 of the engine of the present application;
FIG. 15 is a sectional view of the intake manifold of the engine of the present application, and a side view of the intake manifold of the engine of the present application;
FIG. 16 is a sectional view of the cylinder head of the engine of the present application;
FIG. 17 is a perspective view of a throttle device of the engine of the present application;
FIG. 18 is an enlarged partial view of the engine at point B in section 28 of the present application;
FIG. 19 is a perspective view of the turbocharger assembly of the engine connected to the cylinder head of the present application;
FIG. 20 is a perspective view of the turbocharger assembly and intake manifold of the engine of the present application;
FIG. 21 is a perspective view of the intake manifold of the engine in another embodiment of the present application;
FIG. 22 is a perspective view of an intercooler of the engine of the present application;
FIG. 23 is a sectional view of the intercooler of the engine of the present application;
FIG. 24 is a perspective view of a valve train of the engine of the present application;
FIG. 25 is a connection diagram of the valve train of the engine of the present application;
FIG. 26 is a partial perspective view of a muffler of the engine connected to the frame of the present application;
FIG. 27 is a perspective view of the muffler of the engine of the present application;
FIG. 28 is an exploded view of the muffler of the engine of the present application.

### DETAILED DESCRIPTION

For better understanding of the above objects, features and advantages of the present invention, preferred embodiments will be described in detail below with reference to the accompanying drawings. It should be understood that for those skilled in the art, improvements or transformations can be made based on the above description, and all such improvements and transformations should fall within the scope of protection of the claims attached to this invention.

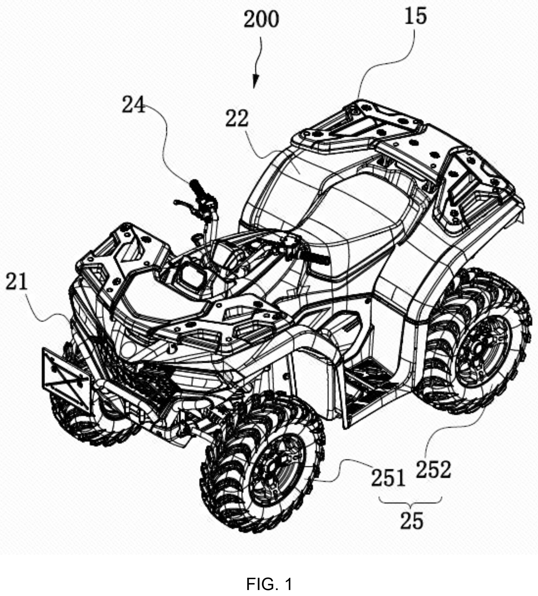

As shown in FIGS. 1 to 3, the present application provides a prime mover assembly 100 and an all-terrain vehicle 200 with the prime mover assembly 100. The all-terrain vehicle 200 includes a frame 21, a vehicle body cover 22, a transmission system (not shown), a steering system 24, and a wheel system 25. The prime mover assembly 100 is at least partially mounted on the frame 21, and the transmission system is connected to the prime mover assembly 100 in a transmission mode. The wheel system 25 is connected to the prime mover assembly 100 by the transmission system. The prime mover assembly 100 outputs the driving force of the all-terrain vehicle 200 and transmits the driving force to the wheel system 25 by the transmission system, so that the wheel system 25 drives the all-terrain vehicle 200 to travel. The steering system 24 is at least partially connected to the wheel system 25, and is used to control the direction of travel of the all-terrain vehicle 200.

The prime mover assembly 100 includes an engine 11, a clutch 12, and a gearbox 13. The clutch 12 is positioned between the engine 11 and the gearbox 13 and is used to transmit the power of the engine 11 to the gearbox 13. The engine 11 includes a housing 111, a valve train 112, a fuel supply mechanism (not shown), a crank connecting rod mechanism 114, an ignition mechanism 115, a pumping oil mechanism 116, and a oil delivery mechanism 117. The housing 111 defines a receiving space, and the valve train 112, the fuel supply mechanism, the crank connecting rod mechanism 114, and the ignition mechanism 115 are at least partially received in the receiving space. The housing 111 includes a cylinder head cover 1111, a cylinder head 1112, a cylinder block 1113, a crankcase 1114, and an oil pan 1115. The cylinder head 1112 is at least partially positioned between the cylinder head cover 1111 and the cylinder block 1113, and is used to connect the cylinder head cover 1111 and the cylinder block 1113. The crankcase 1114 is at least partially positioned between the cylinder block 1113 and the oil pan 1115, and is used to connect the cylinder block 1113 and the oil pan 1115.

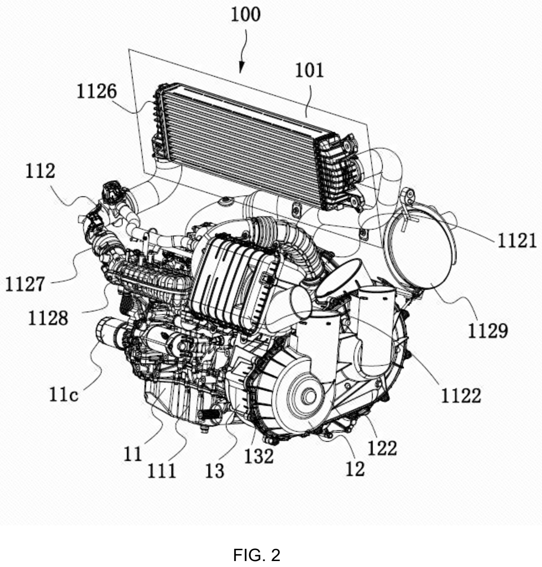

As shown in FIG. 2, the valve train 112 includes an intake assembly 1122, an exhaust assembly 1123, an oil filter 11c, a turbocharger assembly 1121, an intercooler 1126, a throttle assembly 1127, an intake manifold 1128, and an exhaust manifold 1129. The intake assembly 1122 is positioned at the front end of the engine 11, and the exhaust assembly 1123 is positioned at the rear end of the engine 11. This arrangement is beneficial for improving the smoothness of the intake and exhaust of engine 11. One end of the intake assembly 1122 is in fluid communication with the external space, and the other end of the intake assembly 1122 is in fluid communication with one end of the oil filter 11c. The other end of the oil filter 11c is in fluid communication with one end of the turbocharger assembly 1121. The other end of the turbocharger assembly 1121 is in fluid communication with one end of the intercooler 1126, and the other end of the intercooler 1126 is in fluid communication with one end of the throttle assembly 1127. The other end of the throttle assembly 1127 is in fluid communication with one end of the intake manifold 1128, and the other end of the intake manifold 1128 is in fluid communication with the combustion chamber. A preset plane 101 is defined as a plane parallel or intersects with one side of the intercooler 1126. It should be noted that the outer surface of the intercooler 1126 is an irregular surface, but it includes a substantially continuous outer contour surface. The above-mentioned side surface is one of the outer contour surfaces of the intercooler 1126. The preset plane 101 shown in FIG. 2 can substantially represent the area where one side surface of the outer contour surface of the intercooler 1126 is located. The engine 11 has a mounting surface for mounting to the all-terrain vehicle 200, which can be limited to the horizontal plane 102. The intercooler 1126 is inclined and intersects with the mounting surface. An angle α defined between the intercooler 1126 and the mounting surface is greater than or equal to 80 degrees and less than or equal to 90 degrees. It should be noted that the angle defined between the intercooler 1126 and the mounting surface mentioned above is the angle defined between the preset plane 101 and the horizontal plane 102 in FIG. 2. The intercooler 1126 is oriented towards the front of the all-terrain vehicle 200, and an angle defined between the intercooler 1126 and the mounting surface is 85 degrees. By this arrangement, the windward effect of the intercooler 1126 can be optimized, thereby resulting in better cooling effect and a more compact structure of the entire prime mover assembly 100. The intake assembly 1122 is used to suck in air and deliver the air to the oil filter 11c. The oil filter 11c is used to filter out impurities such as dust and moisture in the air and transfer the air to the turbocharger assembly 1121. The turbocharger assembly 1121 can increase the pressure of the air in the valve train 112. When the valve train 112 needs to increase the air intake volume, the turbocharger assembly 1121 is used to generate pressure to increase the air intake volume and improve the intake tumble strength, thereby increasing the oxygen content of the engine 11 intake and improving the power performance of the all-terrain vehicle 200. When the turbocharger assembly 1121 increases the pressure of the air, the internal energy of the air increases with the increase of air pressure. The turbocharger assembly 1121 further transfers the high-temperature air to the intercooler 1126, which cools the high-temperature air and reduces the thermal load of the engine 11. The throttle assembly 1127 controls the amount of air entering the combustion chamber to allow the engine 11 to adapt to different operating conditions and improve its power and fuel economy. The valve train 112 further includes an air conduit assembly 112a, an intake assembly 1122, an oil filter 11c, a turbocharger assembly 1121, an intercooler 1126, a throttle assembly 1127, and the combustion chamber, which are interconnected through the air conduit assembly 112a.

The cylinder block 1113 is equipped with a combustion chamber, and the valve train 112 is connected to the external space and the combustion chamber. The fuel supply mechanism is at least partially in fluid communication with the valve train 112. The fuel provided by the fuel supply mechanism mixes with the air provided by the valve train 112 to form a mixture and the mixture is transmitted to the combustion chamber. The crank connecting rod mechanism 114 is at least partially disposed in the combustion chamber, and the ignition mechanism 115 is at least partially disposed in the combustion chamber. The ignition mechanism 115 ignites the mixture. The driving force of the engine 11 is output through the crank connecting rod mechanism 114.

The engine 11 is arranged transversely, optionally, the crank connecting rod mechanism 114 includes a crankshaft 1141 extending in the left-right direction. The engine 11 further includes a magnetic motor 118, which can be driven by the crankshaft 1141 for power generation. The transmission system includes a transmission shaft (not shown), and the clutch 12 includes a clutch (not shown) and a clutch housing 122. The gearbox 13 includes a gearbox (not shown) and a gearbox housing 132. The magnetic motor 118 is mounted at one end of the crankshaft 1141, and the other end of the crankshaft 1141 is connected to one end of the clutch in a transmission mode. The other end of the clutch is connected to one end of the gearbox in a transmission mode, and the other end of the gearbox is connected to the wheel system 25 through the transmission shaft in a transmission mode. The clutch housing 122, gearbox housing 132, and the housing 111 are at least partially integrated. That is, the clutch housing 122 is at least partially integrated formed with or fixedly connected to the housing 111. The gearbox housing 132 is at least partially integrated formed with or fixedly connected to the housing 111. The clutch housing 122 is at least partially integrated formed with or fixedly connected to the gearbox housing 132. Therefore, the crankshaft 1141 can extend outside the housing 111 and be directly connected to the clutch assembly in transmission mode. The clutch assembly can be directly connected to the gearbox housing 132 in a transmission mode. This arrangement reduces the space occupied by the engine 11 and the transmission system, thereby making the transmission structure simple and with fewer components, resulting in a compact layout of the engine 11 and transmission system, and improving space utilization and transmission efficiency. The wheel system 25 includes a front wheel assembly 251, and the gearbox 13 further includes a spline shaft (not shown in the figure). One end of the spline shaft is connected to the gearbox assembly in a transmission mode, and the other end of the spline shaft is connected to the transmission shaft in a transmission mode and is connected to the front wheel assembly 251 by the transmission shaft, so that the engine 11 can be connected to the front wheel assembly 251 in a transmission mode. An axis of the spline shaft extends in the front-rear direction, so that the arrangement of the spline shaft can be adapted to the structure of the engine 11, the clutch 12, and the gearbox 13 provided in the present application, further saving the layout space of the all-terrain vehicle 200. The wheel system 25 further includes a rear wheel assembly 252 and a rear axle (not shown in the figure), and the rear wheel assembly 252 is connected to the rear axle in a transmission mode. The gearbox housing 132 defines a gearbox through-hole, and the rear axle extends through the gearbox through-hole and connected to the gearbox assembly in a transmission mode, so that the engine 11 can be connected to the rear wheel assembly 252 in a transmission mode. In this embodiment, the valve train 112 further includes a turbocharger assembly 1121, which can enable the intake air of the engine 11 to be greater than or equal to 650 kg/h and less than or equal to 750 kg/h. As an embodiment, the turbocharger assembly 1121 can increase the intake air volume of the engine 11 to 726 kg/h. At this intake volume, the fuel injection rate of the engine 11 reaches 70 kg/h, the crankshaft 1141 speed of the engine 11 is greater than or equal to 8000 r/min and less than or equal to 9000 r/min, and the power output of the engine 11 is greater than or equal to 150 kW/L and less than or equal to 160 kW/L. Therefore, it can output powerful driving force, thereby making the all-terrain vehicle 200 equipped with engine 11 more powerful and adaptable to more complex road conditions. In addition, through the above settings, the overall structure of the prime mover assembly 100 is more compact, which can be better assembled on the all-terrain vehicle 200, making the structure of the all-terrain vehicle 200 more compact.

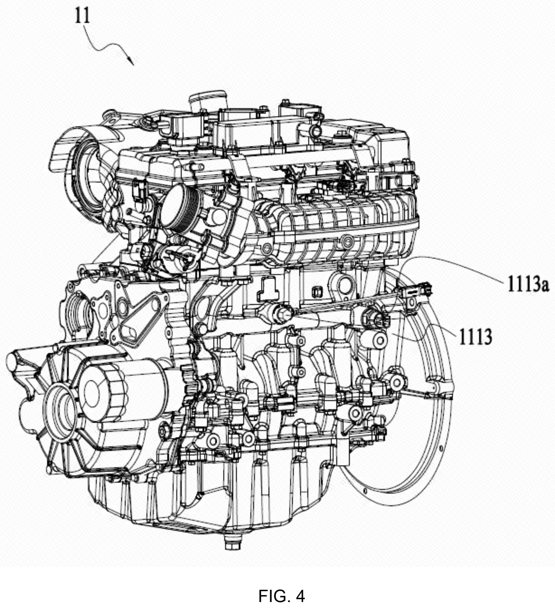

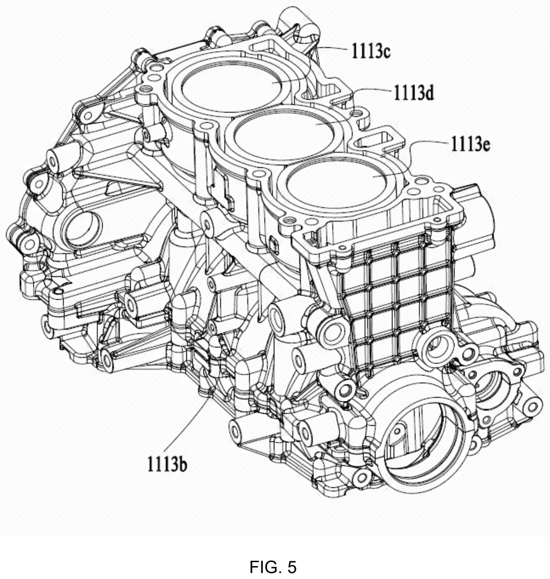

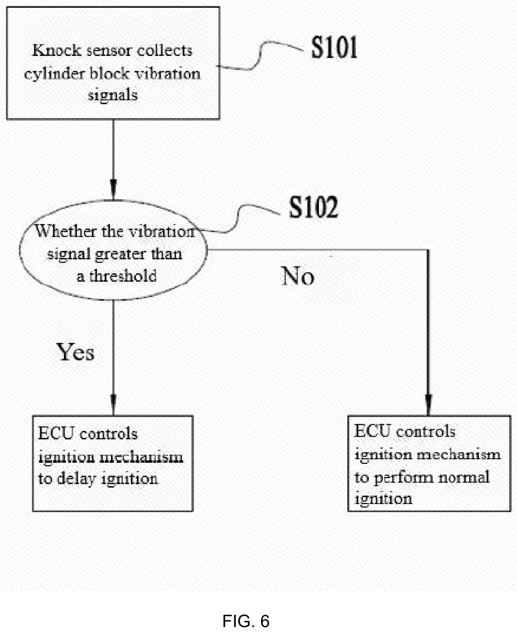

As shown in FIG. 4 to FIG. 6, the cylinder block 1113 is further provided with a knock sensor 1113a and a mounting seat 1113b. The cylinder block 1113 provided in the present application includes a first combustion chamber 1113c, a second combustion chamber 1113d, and a third combustion chamber 1113e. The second combustion chamber 1113d is arranged between the first combustion chamber 1113c and the third combustion chamber 1113e. The mounting seat 1113b is arranged in the middle of the second combustion chamber 1113d, and the cylinder block 1113 extends at least partially to the side away from the second combustion chamber 1113d to form the mounting seat 1113b. The knock sensor 1113a is mounted on the mounting seat 1113b, and is used to monitor the combustion status of gases in each combustion chamber. This method arranges the knock sensor 1113a in a lower temperature area, making the knock sensor 1113a have better safety. The installation method of connecting the knock sensor 1113a to the cylinder block 1113 through the mounting seat 1113b avoids the influence on the strength and heat dissipation performance of the heat dissipation channel. As an embodiment, the mounting seat 1113b is arranged on the side of the cylinder block 1113 adjacent to the intake. By this, the temperature at the location where the mounting seat 1113b is located can be lowered, thereby avoiding damage to the knock sensor 1113a caused by the high temperature of the cylinder block 1113. In addition, setting the mounting seat 1113b at the position of the second combustion chamber 1113d can make the signal received by the knock sensor 1113a more uniform, so that the signal received by the knock sensor 1113a can substantially cover the three cylinder blocks, and thus monitor the detonation situation of the entire cylinder block 1113.

The all-terrain vehicle 200 includes an ECU (Electronic Control Unit), which is used to control the operation of the entire vehicle. It should be noted that the knock sensor 1113a can monitor the combustion situation in cylinder 11 of the engine. When the mixture in the combustion chamber burns rapidly in a very short time, it will generate vibration waves of different frequencies. The knock sensor 1113a will recognize the vibration wave and convert it into an electrical signal, while transmitting the electrical signal to the ECU. When the signal exceeds the limit, the ECU will control the ignition angle based on the electrical signal to alleviate combustion. When the combustion meets the requirements and the knock sensor 1113a detects a signal within the required range, the ECU will control the ignition angle to return to the pre-calibration state based on the electrical signal, thereby achieving better combustion effect. Optionally, the ECU is configured with a preset threshold. The ECU controls the ignition mechanism 115 to delay ignition when the electrical signal transmitted from the knock sensor 1113a to the ECU exceeds the preset threshold. The ECU is configured with a preset threshold. The ECU controls the ignition mechanism 115 to perform normal ignition when the electrical signal transmitted from the knock sensor 1113a to the ECU is less than or equal to the preset threshold.

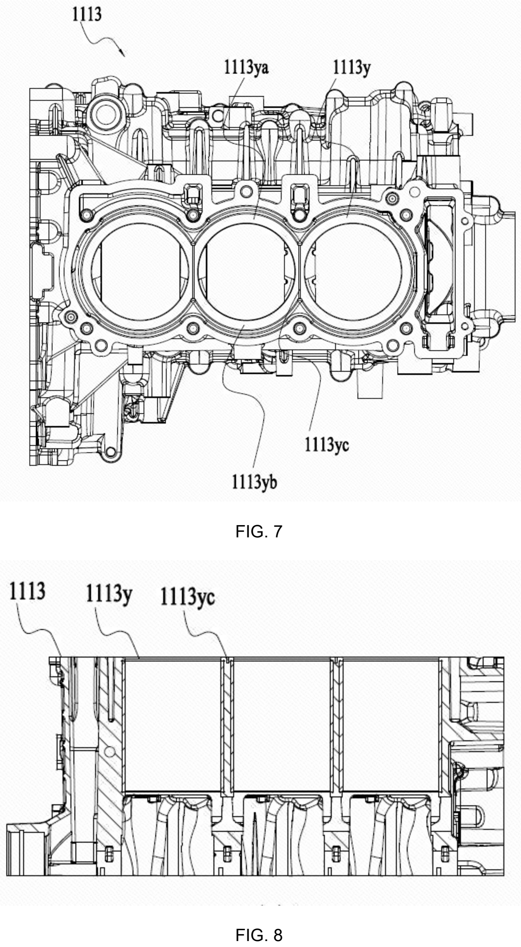

As shown in FIG. 7 to FIG. 8, a cylinder block 1113 is provided with a cylinder water jacket 1113y, which surrounds the combustion chamber. A heat exchange medium is provided in the cylinder body water jacket 1113y for removing the heat from the combustion chamber. As an embodiment, the cylinder water jacket 1113y includes a first path 1113ya and a second path 1113yb, where the path extends substantially along the first direction and the second path 1113yb extends substantially along the second direction. As an embodiment, the cylinder block 1113 is provided with a plurality of combustion chambers, which divide the first path 1113ya and the second path 1113yb. The cylinder block 1113 defines an inlet and an outlet. The heat exchange medium flows in from the inlet, passes through the entire combustion chamber, and then flows out from the outlet. It should be noted that the cylinder block 1113 itself is not necessarily a completely symmetrical component, and the heat exchange medium flowing in from the inlet does not flow through the combustion chamber in a completely symmetrical manner through the first path 1113ya and the second path 1113yb, resulting in a pressure difference between the heat exchange medium in the first path 1113ya and the second path 1113yb. As an embodiment, a heat dissipation structure 1113yc is further mounted between the spaced cylinder holes. The heat dissipation structure 1113yc can be in fluid communication with the first path 1113ya and the second path 1113yb, thereby utilizing the pressure difference between the first path 1113ya and the second path 1113yb to allow the heat exchange medium to flow through the heat dissipation structure 1113yc, thereby taking away the heat from the combustion chamber adjacent to the heat dissipation structure 1113yc and optimizing the cooling effect of the combustion chamber. As an embodiment, the heat dissipation structure 1113yc is designed as a heat dissipation groove or heat dissipation through-hole. When the heat dissipation structure 1113yc is designed as the heat dissipation groove, the groove width of the heat dissipation structure 1113yc is greater than or equal to 1 mm and less than or equal to 2 mm. Furthermore, the groove width of the heat dissipation structure 1113yc is greater than or equal to 1.2 mm and less than or equal to 1.8 mm. Furthermore, the groove width of the heat dissipation structure 1113yc is greater than or equal to 1.4 mm and less than or equal to 1.6 mm. In order to effectively remove heat from the combustion chamber, the groove depth of the heat dissipation structure 1113yc is within a predetermined range. Optionally, the groove depth of the heat dissipation structure 1113yc is greater than or equal to 3 mm and less than or equal to 7 mm. Furthermore, the groove depth of the heat dissipation structure 1113yc is greater than or equal to 4 mm and less than or equal to 6 mm. Furthermore, the groove depth of the heat dissipation structure 1113yc is greater than or equal to 4.5 mm and less than or equal to 5.5 mm. Through such a setting, the heat dissipation structure 1113yc can improve the heat dissipation efficiency of the combustion chamber while ensuring the strength of the cylinder block 1113. As an embodiment, the heat dissipation structure 1113yc is arranged between multiple spaced cylinder holes, that is, multiple heat dissipation structures 1113yc are spaced in the cylinder block 1113, thereby simultaneously connecting the first path 1113ya and the second path 1113yb. It should be noted that due to the constant pressure difference between the first path 1113ya and the second path 1113yb, the heat exchange medium in the multiple heat dissipation structures 1113yc can always maintain flow.

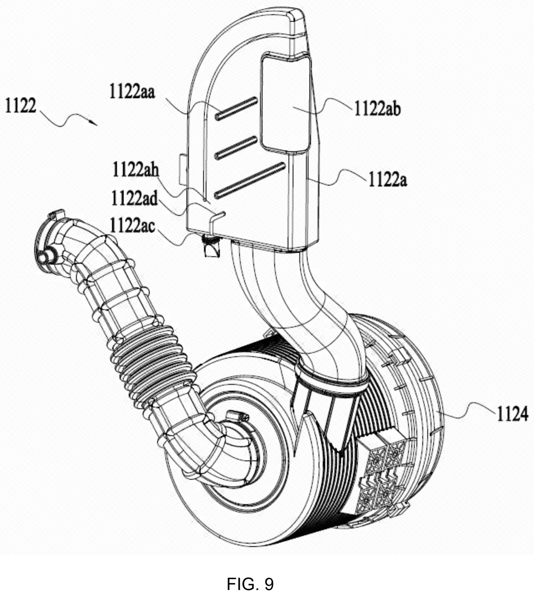

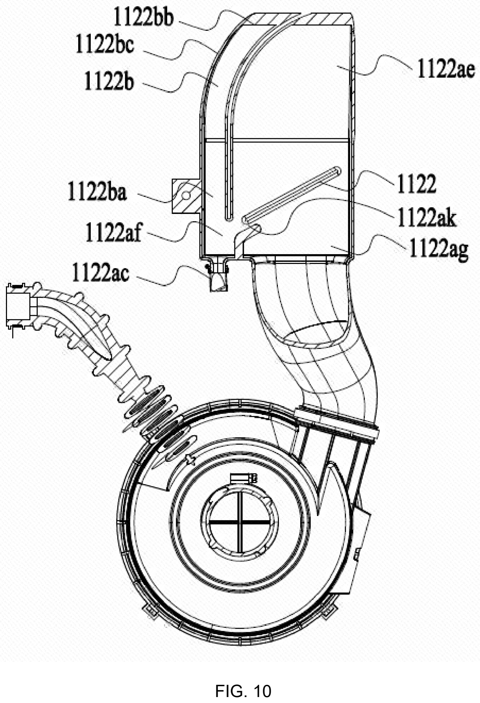

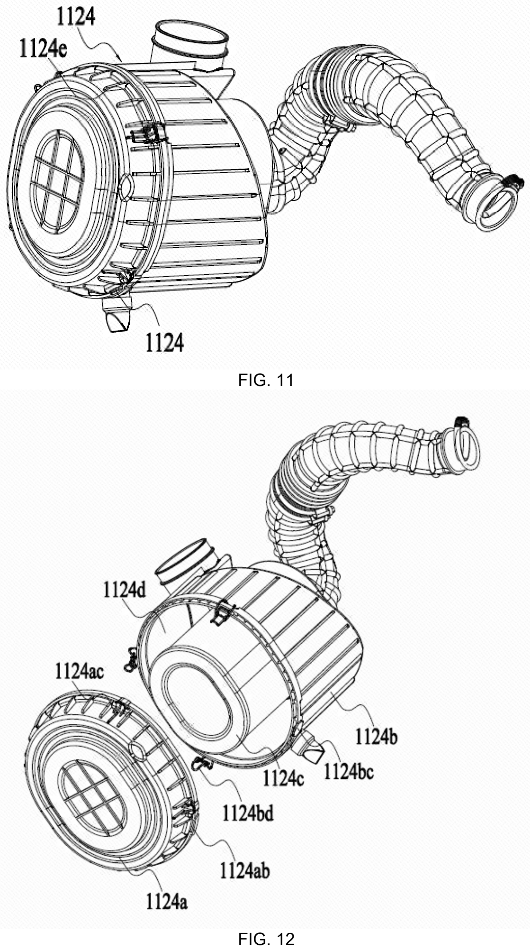

As shown in FIG. 9 to FIG. 12, the valve train 112 includes an intake assembly 1122 and a filter assembly 1124. The intake assembly 1122 includes an air-guiding pipe 1122a and a wavelength pipe 1122b. The wavelength pipe 1122b is mounted inside the air-guiding pipe 1122a, and the air-guiding pipe 1122a is in fluid communication with the external space and the filter assembly 1124. The wavelength pipe 1122b is used to reduce noise in the air-guiding pipe 1122a, thereby improving noise interference and enhancing the comfort of the all-terrain vehicle 200. The other end of the filter assembly 1124 is further connected to the pipeline of the intake assembly 1122 away from the air-guiding pipe 1122a, and continuously delivers the air to the pipeline of the intake assembly 1122 after filtering out impurities such as dust and moisture in the air.

Optionally, the wavelength pipe 1122b is integrally formed with the air-guiding pipe 1122a, which facilitates the production and manufacturing of the air-guiding pipe 1122a and the wavelength pipe 1122b. The wavelength pipe 1122b includes a first portion 1122ba and a second portion 1122bb. The first portion 1122ba is integrally formed with the second portion 1122bb, and the extension direction of the first portion 1122ba is substantially perpendicular to the extension direction of the second portion 1122bb, in order to reduce the space occupied by the wavelength pipe 1122b in the vertical direction. As an optional embodiment, an arc-shaped transition structure 1122bc can be provided between the first portion 1122ba and the second portion 1122bb to facilitate the refraction of sound waves in the wavelength pipe 1122b. One end of the wavelength pipe 1122b is in fluid communication with the air-guiding pipe 1122a, and the air-guiding pipe 1122a is in fluid communication with one end of the wavelength pipe 1122b and is in fluid communication with the external space. The other end of the wavelength pipe 1122b is integrally formed with the air-guiding pipe 1122a, that is, the other end of the wavelength pipe 1122b is closed. After entering the wavelength pipe 1122b from the air-guiding pipe 1122a, the sound waves are reflected at the closed end of the wavelength pipe 1122b and cancel out the sound waves with the same frequency and opposite phase inside the wavelength pipe 1122b, achieving the purpose of noise reduction.

The air-guiding pipe 1122a is provided with a reinforcement structure 1122aa for enhancing the strength of the air-guiding pipe 1122a. The air-guiding pipe 1122a has an intake port 1122ab and a filter valve 1122ac. Along the up-down direction of the engine 11, the intake port 1122ab is defined at the upper end of the air-guiding pipe 1122a, and the filter valve 1122ac is arranged at the lower end of the intake pipe. The reinforcement structure 1122aa is arranged between the intake port 1122ab and the filter valve 1122ac, and the reinforcement structure 1122aa substantially extends in the direction from the intake port 1122ab to the filter valve 1122ac. After air enters the interior of the air-guiding pipe 1122a through the air inlet 1122ab, the reinforced structure 1122aa can guide the air to the filter valve 1122ac. Impurities such as dust and moisture in the air are discharged from the air-guiding pipe 1122a through the filter valve 1122ac, thereby reducing the workload of the filter assembly 1124. As an optional embodiment, the filter valve 1122ac is positioned on the lower side of the closed end of the wavelength pipe 1122b away from the wavelength pipe 1122b. This arrangement allows the reinforcement structure 1122aa to guide both air transmission and sound wave conduction, thereby facilitating the introduction of sound waves into the wavelength pipe 1122b and improving its noise reduction performance. A guide structure 1122ad is arranged in the air-guiding pipe 1122a, which is arranged on the lower side of the closed end of the wavelength pipe 1122b. The guide structure 1122ad extends in the direction from the filter valve 1122ac to the reinforcement structure 1122aa, and is inclined towards the side away from the filter valve 1122ac. The wavelength pipe 1122b and the filter valve 1122ac are arranged on the same side of the guide structure 1122ad. The reinforcement structure 1122aa, the filter valve 1122ac, and the guide structure 1122ad define an input space 1122ae, a filter space 1122af, and an output space 1122ag in the air-guiding pipe 1122a, and a guide channel 1122ah is defined between the intake port 1122ab and the filter valve 1122ac through the reinforcement structure 1122aa. The input space 1122ae is in fluid communication with the outside world, and the air and sound waves in the input space 1122ae are guided through the guide channel 1122ah to the filtering space 1122af and the wavelength pipe 1122b. After the air passes through the filter valve 1122ac to remove impurities, it flows into the output space 1122ag, and the sound waves enter the wavelength pipe 1122b for reducing noise. A gap 1122ak is defined between the reinforcement structure 1122aa and the guide structure 1122ad, which is in fluid communication with the filtering space 1122af and the output space 1122ag, and the output space 1122ag is in fluid communication with the filter assembly 1124. Through the above, impurities and sound waves in the air are more likely to enter the filter valve 1122ac and the wavelength pipe 1122b, thereby improving the filtering performance of the filter valve 1122ac and the noise reduction performance of the wavelength pipe 1122b.

The filter assembly 1124 includes a first housing 1124a, a second housing 1124b, and a filter element 1124c. The first housing 1124a and the second housing 1124b are detachably connected, and cooperatively define a first receiving space 1124d between them. The filter element 1124c is received in the first receiving space 1124d, and is used to filter out dust and other impurities in the air. The first housing 1124a and the second housing 1124b are both provided with a connector 1124e, which are at least partially positioned in the blind spot of the line of sight, that is, in a position where the line of sight cannot be directly seen during assembly. The first housing 1226 is provided with a first positioning member 1124ab, and the second housing is provided with a second positioning member 1124bc. The first housing 1124a includes a first position and a second position. When the first positioning member 1124ab and the second positioning member 1124bc are in a mating position, the first housing 1124a and the second housing 1124b are detachably connected through the connector 1124e. Optionally, the first housing 1124a is provided with a first buckle 1124ac, and the second housing 1124b is provided with a second buckle 1124bd. The first buckle 1124ac and the second buckle 1124bd are engaged, which facilitates the connection and disassembly of the first housing 1124a and the second housing 1124b, and improves the convenience of assembling and maintaining the filter assembly 1124. The first positioning member 1124ab is positioned on the edge of the first housing 1124a, the second positioning member 1124bc is positioned on the edge of the second housing 1124b, and the first positioning member 1124ab and the second positioning member 1124bc are located at the connection between the first housing 1124a and the second housing 1124b. When the first positioning member 1124ab can abut against or be engaged with the second positioning member 1124bc, the first housing 1124a is in the first position, and the first buckle 1124ac can be engaged with the second buckle 1124bd. When the first positioning member 1124ab does not abut against or is not engaged with the second positioning member 1124bc, the first housing 1124a is in the second position, and at this time, the first buckle 1124ac cannot be engaged with the second buckle 1124bd. When the first positioning member 1124ab can be matched with the second positioning member 1124bc, the first housing 1124a and the second housing 1124b are in a position where they can be precisely clamped. The first positioning member 1124ab may be a limit hole, and the second positioning member 1124bc may be limit key. Of course, the first positioning member 1124ab may be a limit key, and the second positioning member 1124bc may be a limit hole. This method determines the mounting positions of the first housing 1124a and the second housing 1124b through the first positioning member 1124ab and the second positioning member 1124bc, thereby facilitating the connection between the first housing 1124a and the second housing 1124b, further improving the convenience and accuracy of the assembly and maintenance of the filter assembly 1124.

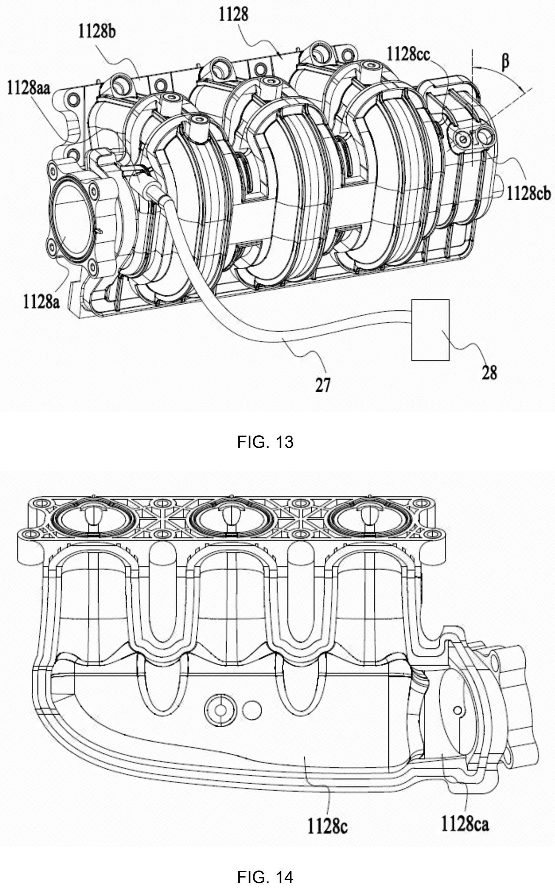

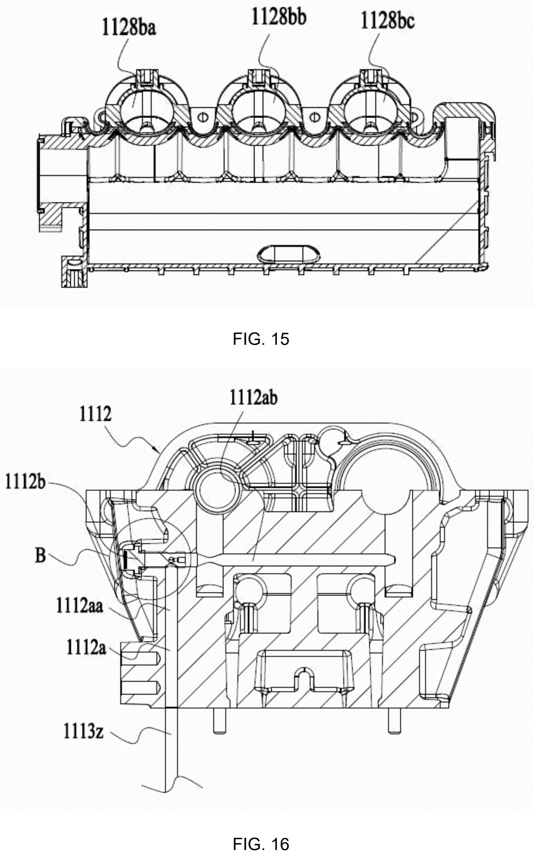

As shown in FIG. 13 to FIG. 15, the valve train 112 further includes an intake manifold 1128. In this embodiment, the intake manifold 1128 includes an intake end 1128a, an exhaust end 1128b, and a plenum chamber1128c. The intake end 1128a is in fluid communication with the intake assembly 1122, and the exhaust end 1128b is in fluid communication with the cylinder head 1112. The plenum chamber1128c is at least partially positioned between the intake end 1128a and the exhaust end 1128b. As an embodiment, an intake direction of the intake end 1128a is defined as a first direction, and along the first direction, the plenum chamber1128c extends to a predetermined length and defines an extension portion 1128ca. It should be noted that the length of the plenum chamber1128c extending along the first direction is greater than the width occupied by the exhaust end 1128b along the first direction. In this embodiment, the exhaust end 1128b defines a first exhaust port 1128ba, a second exhaust port 1128bb, and a third exhaust port 1128bc. The first exhaust port 1128ba is defined at one end adjacent to the intake end 1128a, the third exhaust port 1128bc is defined at one end away from the first exhaust port 1128ba, and the second exhaust port 1128bb is defined between the first exhaust port 1128ba and the third exhaust port 1128bc. As an embodiment, the extension portion 1128ca extends to one end away from the first exhaust port 1128ba and the third exhaust port 1128bc. Through the above, the plenum chamber1128c can reduce the airflow resistance caused by intermittent intake of the intake manifold 1128, and improve the intake capacity of the engine 11. At least a portion of the plenum chamber1128c protrudes outward to define a mount base 1128cb. A sensor 1128cc is mounted on and fixedly connected to the mounting seat 1128cb. The sensor 1128cc is used to detect the temperature and pressure of the gas in the plenum chamber 1128c. The sensor 1128cc at least partially passes through the connection between the mount base 1128cb and the plenum chamber 1128c and is at least partially positioned in the plenum chamber 1128c. An extension direction of the portion of the sensor 1128cc in the plenum chamber 1128c is defined as a second direction, and an extension direction of the normal of the plenum chamber 1128c at the connection between the mount base 1128cb and the plenum chamber 1128c is defined as a third direction, and an angle β defined between the second direction and the third direction is greater than or equal to 40 degrees and less than or equal to 50 degrees. This method can eliminate the influence of the intake manifold 1128 on the sensor 1128cc, and improve the stability, accuracy, and reliability of the sensor 1128cc. As an optional embodiment, the angle β between the second direction and the third direction may be greater than or equal to 42 degrees and less than or equal to 48 degrees, and the angle β between the second direction and the third direction may be greater than or equal to 44 degrees and less than or equal to 46 degrees.

It should be noted that the first exhaust port 1128ba, the second exhaust port 1128bb, and the third exhaust port 1128bc are respectively connected to the plenum chamber1128c. This allows the gas to be mixed in the plenum chamber1128c before being discharged from each exhaust port, improving the mixing of oil and gas, and thus enhancing the smoothness and intake volume of the engine 11.

As an embodiment, the all-terrain vehicle 200 further includes a carbon pipe 27, one end of the carbon pipe 27 is in fluid communication with a carbon canister 28 in the fuel tank, and the other end of the carbon pipe 27 is in fluid communication with an intake manifold 1128. Optionally, the carbon pipe 27 is in fluid communication with the intake end 1128a of the intake manifold 1128. As an embodiment, the intake end 1128a of the intake manifold 1128 defines a vent hole 1128aa, the vent hole 1128aa is integrally formed with the intake manifold 1128. The carbon pipe 27 is connected to the vent hole 1128aa and can deliver fuel vapor from the carbon canister 28 to the intake manifold 1128, where it is fully mixed in plenum chamber1128c before flowing into the first exhaust port 1128ba, the second exhaust port 1128bb, and the third exhaust port 1128bc. It should be noted that the amount of fuel injected into the combustion chamber of the engine 11 is precisely calculated based on the current state. The fuel vapor input from the carbon pipe 27 will cause an increase in the amount of fuel in the combustion chamber. When it exceeds its preset amount, it will lead to insufficient combustion, resulting in carbon deposition and damage to cylinder block 1113. By connecting the carbon pipe 27 to the vent hole 1128aa of the intake manifold 1128, the fuel vapor is fully mixed in the plenum chamber and then flows into the first exhaust port 1128ba, the second exhaust port 1128bb, and the third exhaust port 1128bc, respectively. At this point, the increased fuel vapor is evenly distributed to each combustion chamber, thereby avoiding a sudden increase in fuel volume in a single combustion chamber, which can lead to insufficient combustion and large carbon deposits, and damage the stability of engine 11. Through this arrangement, the consistency of the intake flow rate of the engine 11 is guaranteed, and the consistency of combustion in each combustion chamber is improved, thereby ensuring the consistency of the state of each cylinder block and the combustion chamber, and improving the stability and service life of the engine 11.

Due to the intake manifold 1128 in fluid communication with the intake assembly 1122 and the cylinder head 1112, under the action of the crank connecting rod mechanism 114, The pressure borne by the intake manifold 1128 is larger than that of the intake assembly 1122, and the pressure value borne by the intake manifold 1128 changes rapidly. The wall thickness of the intake manifold 1128 is greater than or equal to 2 mm and less than or equal to 4 mm, and the wall thickness of the intake assembly 1122 is greater than or equal to 1.5 mm and less than or equal to 3.5 mm. This method further simplifies the structure of the intake assembly 1122 while ensuring its strength, thereby making the engine 11 lighter in weight and saving manufacturing costs. As an optional embodiment, the wall thickness of the intake manifold 1128 is greater than or equal to 2.5 mm and less than or equal to 3.5 mm, and the wall thickness of the intake assembly 1122 is greater than or equal to 2 mm and less than or equal to 3 mm. Optionally, the wall thickness of the intake manifold 1128 may be 2 mm, 2.5 mm, 3 mm, 3.5 mm, or 4 mm, or the like, and the wall thickness of the intake assembly 1122 may be 1.5 mm, 2 mm, 2.5 mm, 3 mm, or 3.5 mm, or the like.

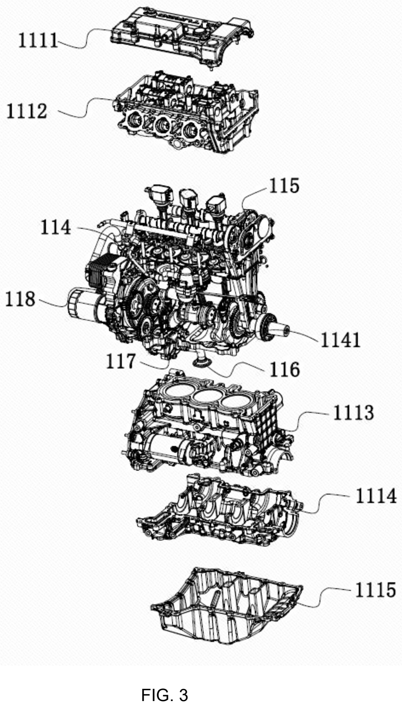

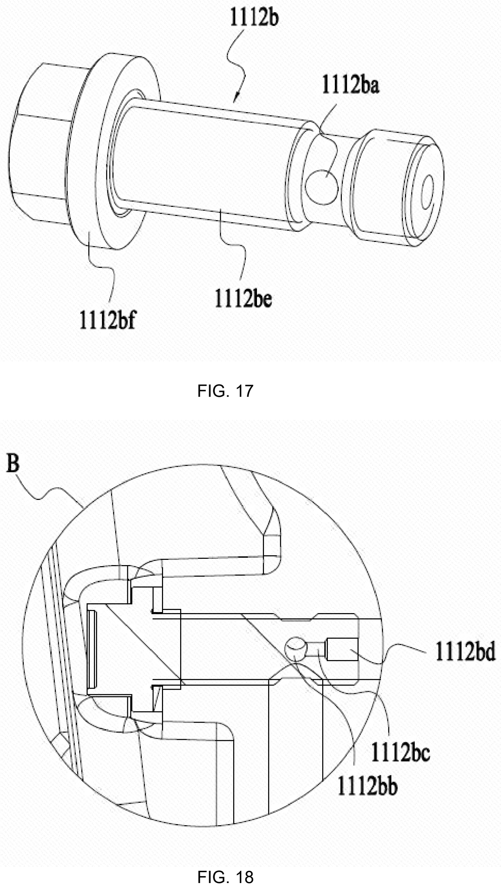

As shown in FIG. 3, FIG.16 to FIG.18, the oil delivery mechanism 117 includes a delivery pipeline and an oil passage defined in the housing 111. The oil delivery mechanism 117 is in fluid communication with the pumping oil mechanism 116. The pumping oil mechanism 116 delivers lubrication oil from the oil pan 1115 to the oil delivery mechanism 117. The oil delivery mechanism 117 then delivers the oil to various components of the engine 11. As an embodiment, a first oil passage 1112a is defined in the cylinder head 1112, and a second oil passage 1113z is provided in the cylinder block 1113. The first oil passage 1112a and the second oil passage 1113z are at least partially in fluid communication with each other and are in fluid communication with the oil delivery mechanism 117. The first oil passage 1112a includes a first oil delivery passage 1112aa and a second oil delivery passage 1112ab. A throttle bolt 1112b is also provided on the cylinder head 1112. The extension direction of the first oil delivery passage 1112aa intersects or is perpendicular to the extension direction of the second oil delivery passage 1112ab. One end of the first oil delivery passage 1112aa is in fluid communication with the second oil passage 1113z, and the other end of the first oil delivery passage 1112aa is in fluid communication with the second oil delivery passage 1112ab by the throttle bolt 1112b. The other end of the second oil delivery passage 1112ab is in fluid communication with other components. It should be noted that the inner diameters of the first oil delivery passage 1112aa and the second oil delivery passage 1112ab are different, thereby resulting in different flow rates of the first oil delivery passage 1112aa and the second oil delivery passage 1112ab. Optionally, due to the first oil delivery passage 1112aa being in fluid communication with the second oil passage 1113z defined on the cylinder block 1113 and the larger inner diameter of the second oil passage 1113z on the cylinder block 1113, its flow rate is higher. For components that require specific lubrication, the required lubricating oil flow rate is less than the flow rate in the second oil passage 1113z. Based on this, the present application provides a throttle bolt 1112b that can both close part of the oil passage and change the flow rate. Optionally, the throttle bolt 1112b includes a throttle portion 1112ba. The throttle portion 1112ba includes a first channel 1112bb, a second channel 1112bc, and a third channel 1112bd. The first oil delivery passage 1112aa is in fluid communication with the first channel 1112bb, the second oil delivery passage 1112ab is in fluid communication with the third channel 1112bd, and the first channel 1112bb is in fluid communication with the third channel 1112bd through the second channel 1112bc. The diameter of the second channel 1112bc is smaller than that of the first channel 1112bb, indicating that the throttle bolt 1112b integrates the function of throttling. This method can reduce the manufacturing cost of the engine 11, and the assembly of throttle bolt 1112b to housing 111 is simple and convenient, and can effectively identify whether throttle bolt 1112b is assembled in place, improving the sealing of the oil delivery passage.

As an embodiment, the second oil delivery passage 1112ab is drilled from the outside of the cylinder head 1112 in a direction perpendicular to the first oil delivery passage 1112aa. After connecting to the first oil delivery passage 1112aa, it continues to drill in a direction perpendicular to the first oil delivery passage 1112aa. After the first oil delivery passage 1112aa is in fluid communication with the second oil delivery passage 1112ab, it is necessary to close the opening opened from the cylinder head 1112. As an embodiment, the throttle bolt 1112b is further provided with a connecting portion 1112be and a protrusion portion 1112bf. The connection portion 1112be is designed as an external thread structure and is configured to close the opening, and the opening is provided with an external thread structure that matches the external thread structure above. The protrusion portion 1112bf can further prevent lubricating oil from flowing out after the throttle bolt 1112b closes the opening. Optionally, the protrusion portion 1112bf is designed as a retaining ring and positioned at one end away from the throttle portion 1112ba, and the connection portion 1112be is distributed around the outer side of the throttle bolt 1112b. All of the protrusion portion 1112bf, the throttle portion 1112ba, and the connection portion 1112be are integrally formed. Through the above, not only can the throttling purpose be achieved, but also the sealing of the oil delivery passage can be improved, thereby reducing the manufacturing cost of engine 11.

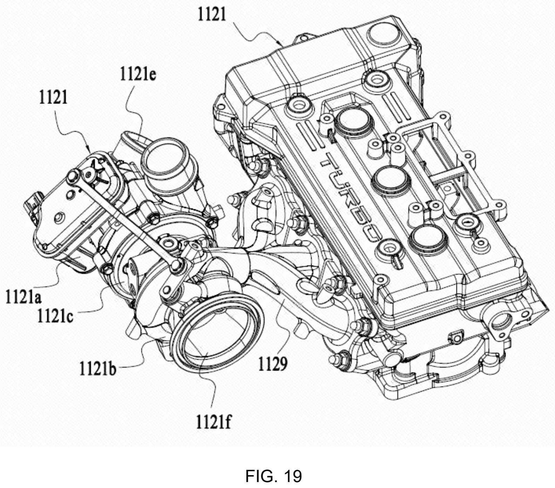

As shown in FIG. 19 to FIG. 20, as one embodiment, the turbocharger assembly 1121 includes a compressor 1121a, a turbine 1121b, and a center housing 1121c. The compressor 1121a is in fluid communication with the oil filter 11c for compressing the gas sucked into the oil filter 11c and introducing it into the intercooler 1126 (refer to FIG. 2). The turbine 1121b is in fluid communication with the exhaust manifold 1129 and the gas discharged from exhaust manifold 1129 drives the turbine 1121b to rotate. It should be noted that the turbine 1121b and the compressor 1121a share a common drive shaft (not shown), and the turbine 1121b is capable of transmitting its own power to the compressor 1121a by the drive shaft to drive the compressor 1121a to operate and compress air. As an embodiment, both the compressor 1121a and the turbine 1121b are positioned on the center housing 1121c. As an embodiment, the exhaust manifold 1129 is integrally formed with the turbine 1121b. By integrating the exhaust manifold 1129 with the turbine 1121b, it can improve the integration of the turbocharger assembly 1121 and improve the convenience of the turbocharger assembly 1121. In addition, the exhaust manifold 1129 and the turbine 1121b are integrated to avoid the need for a connection structure between the exhaust manifold 1129 and the turbine 1121b, which reduces the design cost of the turbocharger assembly 1121 and lowers the weight of the turbocharger assembly 1121, thereby making it meet the compactness requirements of the all-terrain vehicle 200. In this embodiment, the engine 11 includes a plurality of cylinder blocks, so the exhaust manifold 1129 includes a plurality of pipe, with each pipe being separately connected to each cylinder block. One end of a single pipe is connected to the exhaust port of the combustion chamber, and the other end of each pipe converges to the turbine 1121b. As an embodiment, the turbocharger assembly 1121 includes an intake end 1121e and an exhaust end 1121f. The intake end 1121e is positioned adjacent to the compressor 1121a, the exhaust end 1121f is positioned adjacent to the turbine 1121b, and the exhaust manifold 1129 is positioned between the intake end 1121e and the exhaust end 1121f, and is in fluid communication with the exhaust end 1121f. It should be noted that the intake end 1121e is not directly in fluid communication with the exhaust end 1121f on the turbocharger assembly 1121. Through such arrangement, the structure of the turbocharger assembly 1121 can be simplified to the greatest extent possible, which greatly improves its assembly and compact structure while meeting the basic needs of compressed intake. When the exhaust manifold 1129 is integrally formed with the turbocharger assembly 1121, the overall structure of the turbocharger assembly 1121 and the exhaust manifold 1129 is still connected to the cylinder head 1112 by the exhaust manifold 1129. As an embodiment, the exhaust manifold 1129 is provided with a first connection end 1129a and a second connection end 1129b. The first connection end 1129a and the second connection end 1129b both define a first connection hole, and the cylinder head 1112 defines a second connection hole. The turbocharger assembly 1121 is connected to the cylinder head 1112 by means of a fastener passing through the first connection hole and the second connection hole. The first connection end 1129a and the second connection end 1129b are both made of a first material, and the fastener is made of a second material. The second material differs from the first material in terms of specific heat capacity and the amount of deformation upon heat absorption. It should be noted that depending on the number of cylinders in cylinder head 1112, a third connection end 1129c or more connection ends can be arranged, which will not be repeated here.

It should be noted that the working principle of the turbocharger is to use the exhaust gas burned in the cylinder 11 of the engine to drive the turbine 1121b to rotate, with a working temperature of up to 700 °C to 900 °C. At such temperatures, the connection between the exhaust manifold 1129 and the cylinder head 1112 may fail due to temperature changes. As an embodiment, a preset gap 1129g is defined between the first connection end 1129a and the second connection end 1129b. When temperature changes cause deformation of the first connection end 1129a and/or the second connection end 1129b, The preset gap 1129g can absorb the deformation of the first connection end 1129a and/or the second connection end 1129b, avoiding the transmission of the force generated by the deformation of the first connection end 1129a and/or the second connection end 1129b to the fastener, thereby ensuring that the fastener can still maintain a good connection relationship under high temperature, avoiding the loosening of the fastener and causing air leakage between the exhaust manifold 1129 and the cylinder head 1112, which will affect the service life of the entire engine 11. As an embodiment, the present application provides a three cylinder engine 11, that is, the cylinder head 1112 is provided with three combustion chambers, which are respectively connected through the first connection end 1129a, the second connection end 1129b, and the third connection end 1129c of the exhaust manifold 1129. A preset gap 1129g is defined between each of the first connection end 1129a, the second connection end 1129b, and the third connection end 1129c, and the preset gap 1129g is greater than or equal to 3 mm and less than or equal to 5 mm. Furthermore, the preset gap 1129g defined between each of the first connection end 1129a, the second connection end 1129b, and the third connection end 1129c is greater than or equal to 3.5 mm and less than or equal to 4.5 mm. More optionally, the preset gap 1129g defined between each of the first connection end 1129a, the second connection end 1129b, and the third connection end 1129c is greater than or equal to 3.8 mm and less than or equal to 4.2 mm. Through such arrangement, it can be ensured that the connection between the exhaust manifold 1129 and the cylinder head 1112 can absorb material deformation caused by high temperature under high temperature conditions, while avoiding excessive clearance and stress concentration, and avoiding greater damage.

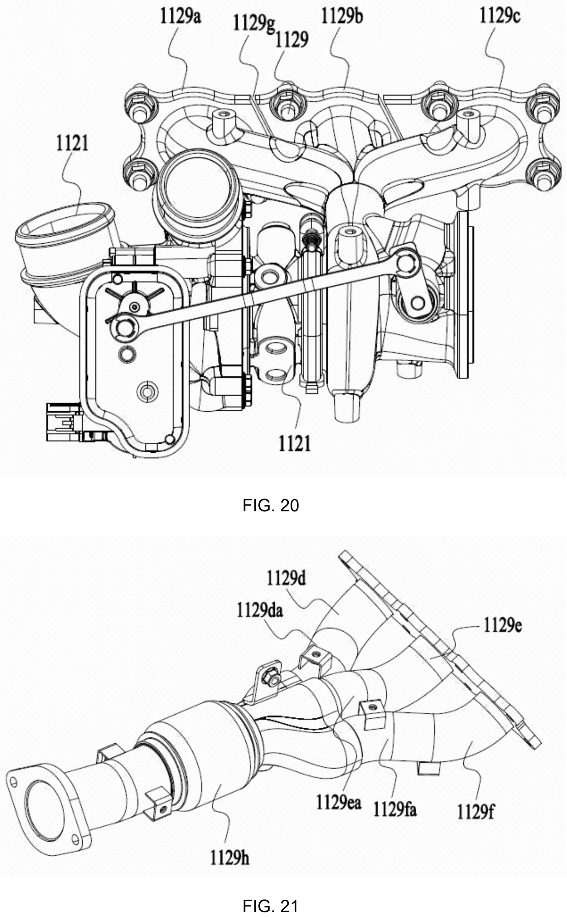

In order to improve exhaust efficiency, the present application further provides an equally long exhaust manifold 1129 structure. As shown in FIG. 21, optionally, the exhaust manifold 1129 includes a first manifold 1129d, a second manifold 1129e, and a third manifold 1129f, where the first manifold is connected to the first connection end 1129a, the second manifold 1129e is connected to the second connection end 1129b, and the third manifold 1129f is connected to the third connection end 1129c. The first manifold 1129d is connected to one of the combustion chambers of the cylinder head 1112 by the first connection end 1129a, the second manifold 1129e is connected to one of the combustion chambers of the cylinder head 1112 by the second connection end 1129b, and the third manifold 1129f is connected to one of the combustion chambers of the cylinder head 1112 by the third connection end 1129c. It should be noted that the positions of the combustion chambers on cylinder head 1112 are different, resulting in different directions of the first manifold 1129d, the second manifold 1129e, and the third manifold 1129f after they are connected to cylinder head 1112. The first manifold 1129d, the second manifold 1129e, and the third manifold 1129f all converge at the same exhaust port. Under such arrangement, the first manifold 1129d, the second manifold 1129e, and the third manifold 1129f have different paths, thereby resulting in different lengths of the exhaust gas paths within the first manifold 1129d, the second manifold 1129e, and the third manifold 1129f. As an embodiment, the first manifold 1129d, the second manifold 1129e, and the third manifold 1129f are configured to bend away from their extension direction. Optionally, the first manifold 1129d extends along a direction of a first straight line, the second manifold 1129e extends along a direction of a second straight line, and the third manifold 1129f extends along a direction of a third straight line. In this embodiment, the first manifold 1129d further includes a first bending portion 1129da, which is away from the first straight line. The second manifold 1129e further includes a second bending portion 1129ea, which is away from the second straight line. The third manifold 1129f further includes a third bending portion 1129fa, which is away from the third straight line. It should be noted that due to the different directions of the first manifold 1129d, the second manifold 1129e, and the third manifold 1129f, the degrees of bending of the first bending portion 1129da, the second bending portion 1129ea, and the third bending portion 1129fa are different. Through the above arrangement, it can be achieved that the lengths of the first manifold 1129d, the second manifold 1129e, and the third manifold 1129f are substantially the same. Thus, it can be ensured that the lengths of the flow path of the exhaust gas when it is discharged from different combustion chambers in cylinder head 1112 are substantially the same, and it can converge to the exhaust port of the exhaust manifold 1129 at almost the same time. Under such a design, the exhaust is prevented from moving in the exhaust manifold 1129, thereby increasing the smoothness of the exhaust and thus increasing the exhaust efficiency.

As an embodiment, the first manifold 1129d, the second manifold 1129e, and the third manifold 1129f converge at the same connection point, and a corrugated pipe is mounted between the connection point and the exhaust port. The corrugated pipe can effectively absorb the vibration generated by the gas impact on the exhaust manifold 1129 during exhaust, thereby increasing the stability of the exhaust manifold 1129. On the other hand, due to the vibration generated by gas impact on the exhaust manifold 1129, long-term vibration can lead to fatigue of the exhaust manifold 1129, thereby increasing the risk of fracture of the exhaust manifold 1129. By absorbing the above-mentioned vibrations through corrugated tubes, material fatigue can be effectively avoided, the service life of exhaust manifold 1129 can be increased, and thus the service life of the entire engine 11 can be extended.

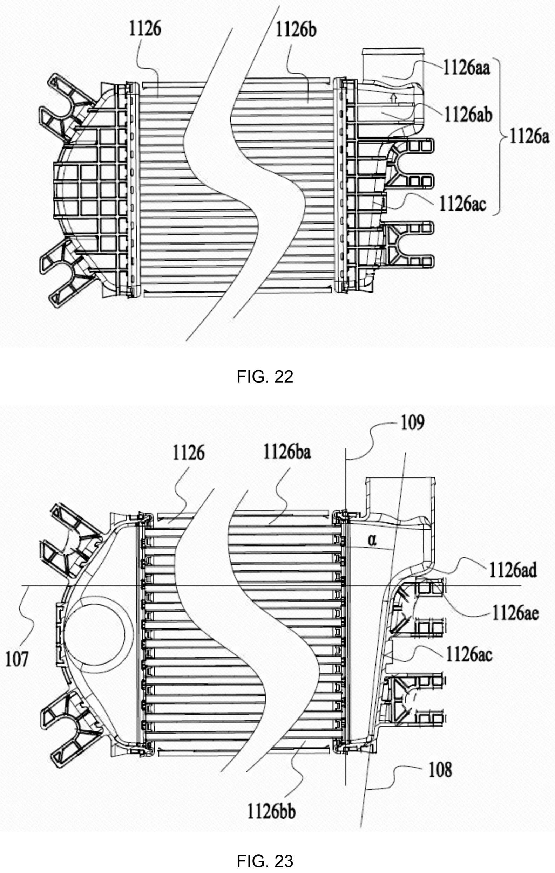

As shown in FIG. 22 to FIG. 23, the intercooler 1126 includes a guide structure 1126a and a cooling structure 1126b. The guide structure 1126a is in fluid communication with the turbocharger assembly 1121 (refer to FIG. 2), and the guide structure 1126a is in fluid communication with the cooling structure 1126b. The high-temperature air output from the turbocharger assembly 1121 is transmitted through the guide structure 1126a to the cooling structure 1126b, which is used to reduce the temperature of the high-temperature air output from the turbocharger mechanism. In the present application, the cooling structure 1126b is configured as several cooling pipes, and the cooling structure 1126b may be configured as an air-cooled structure or a water-cooled structure. The guide structure 1126a includes an intake portion 1126aa, a connection portion 1126ab, and a first guide portion 1126ac. One end of the intake portion 1126aa is fixedly connected or integrally formed with the connection portion 1126ab, and the other end of the connection portion 1126ab is fixedly connected or integrally formed with the other end of the first guide portion 1126ac. The guide structure 1126a defines a receiving space inside, and the turbocharger assembly 1121 is connected to the intake portion 1126aa, thereby transmitting air into the receiving space through the intake portion 1126aa. The cooling structure 1126b is connected to the connection portion 1126ab, and the guide structure 1126a transfers the air in the receiving space to the cooling structure 1126b through the connection portion 1126ab. The inner wall of the first guide portion 1126ac away from the cooling structure 1126b is configured as a slope, and the inner wall of the first guide portion 1126ac far away from the cooling structure 1126b extends along a first plane 108. The cooling structure 1126b extends along a predetermined direction 107, and in a second plane 109 perpendicular to the predetermined direction 107, the angle between the inner wall of the first guide portion 1126ac away from the cooling mechanism 1227b and the second plane 109 is an acute angle, that is, the angle between the first plane 108 and the second plane 109 is an acute angle. After the turbocharger assembly 1121 transfers high-pressure air into the receiving space, the first guide portion 1126ac plays a guiding role in guiding the high-pressure air to enter the cooling structure 1126b, so that the high-pressure air can smoothly enter the cooling structure 1126b, thereby reducing the pressure loss of high-pressure air, improving the efficiency of the engine 11, and ensuring the power performance of the engine 11. Furthermore, an angle between the first plane 108 and the second plane 109 is defined as an angle α, and the angle α is greater than or equal to 5 degrees and less than or equal to 10 degrees. It should be noted that the angle α may be greater than or equal to 6 degrees and less than or equal to 9 degrees, or the angle α may be greater than or equal to 7 degrees and less than or equal to 8 degrees. As an optional embodiment, the angle α may be 5 degrees, 6 degrees, 7 degrees, 8 degrees, 9 degrees, or 10 degrees, or the like.

The cooling structure 1126b includes a first portion 1126ba and a second portion 1126bb. The first portion 1126ba is arranged at the upper end of the cooling structure 1126b, and the second portion 1126bb is arranged at the lower side of the first portion 1126ba. The guide structure 1126a further includes a second guide portion 1126ad, which is positioned between the first guide portion 1126ac and the intake portion 1126aa, and the upper end of the first guide portion 1126ac protrudes in a direction away from the connection portion 1126ab to define the second guide portion 1126ad. This setting allows the second guide portion 1126ad to guide the air into the cooling pipe of the first portion 1126ba, thereby making it easier for air to enter the cooling pipe of the first portion 1126ba and making the air circulation in the cooling pipe more uniform, thereby avoiding the problem of poor cooling effect of the intercooler 1126 due to air easily gathering at the lower end of the intercooler 1126, and improving the cooling efficiency of the cooling structure 1126b. The second guide portion 1126ad may be configured as an arc shape, which can reduce the pressure loss of air and allow air to smoothly enter the cooling pipe of the first portion 1126ba. Of course, the second guide portion 1126ad may also be designed as a slope. As an alternative embodiment, the first guide portion 1126ac and the second guide portion 1126ad are configured as a combination of flat surface and curved surface, or as a combination of flat surfaces, or as a combination of curved surfaces. Furthermore, the number of cooling pipes in the first portion 1126ba is defined as M1, and the number of cooling pipes in the second portion 1126bb is defined as M2. A ratio of M2 to M1 is greater than or equal to 4 and less than or equal to 7. It should be noted that the ratio of M2 to M1 may be greater than or equal to 5 and less than or equal to 6. As long as there is a structure in the guide structure 1126a that guides air into the cooling pipes at the upper end of the cooling structure 1126b, making it easier for air to enter the cooling pipes at the upper end of the cooling structure 1126b, and thus making the air circulation of each cooling pipe entering the cooling structure 1126b more uniform, all technical solutions are within the scope of protection of the present application.

The guide structure 1126a further includes a transition portion 1126ae, and the transition portion 1126ae is arranged between the first guide portion 1126ac and the second guide portion 1126ad, and the transition portion 1126ae is arranged in an arc shape. After entering the guide structure 1126a, at least a portion of the air is transmitted through the second guide portion 1126ad to the first guide portion 1126ac, and guided by the first guide portion 1126ac into the cooling pipe of the second portion 1126bb. The transition portion 1126ae can reduce the impact of air during the process of transmitting from the second guide portion 1126ad to the first guide portion 1126ac, so that the air can be more smoothly transmitted from the second guide portion 1126ad to the first guide portion 1126ac, thereby reducing the pressure loss of air and ensuring the power performance of the engine 11.

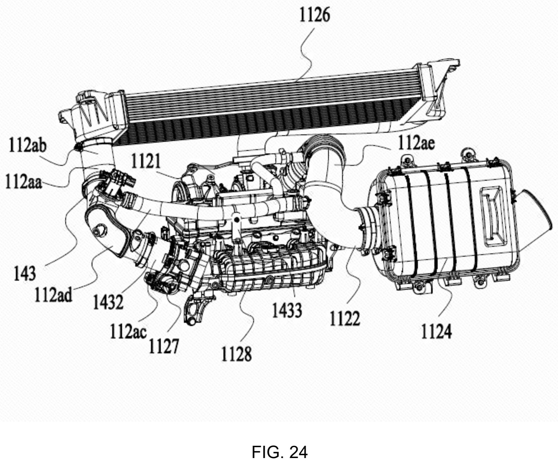

As shown in FIG. 24, as an embodiment, the all-terrain vehicle 200 includes an ECU (Electronic Control Unit) for controlling the operation of the entire vehicle. It should be noted that when the all-terrain vehicle 200 is driving at high speed, the turbocharger assembly 1121 is in a high load working state. At this time, the ECU controls the turbocharger assembly 1121 to continuously compress the air filtered in the filter assembly 1124 and cool it through the intercooler 1126 before delivering it to the throttle assembly 1127. When the driver steps on the brake or performs a downshift action, the ECU receives a load reduction command and the throttle assembly 1127 is closed. At this time, although the ECU controls the turbocharger assembly 1121 to stop compressing air, due to the structural characteristics of the turbocharger assembly 1121 itself and the special power source, the turbocharger assembly 1121 itself will produce hysteresis, which will cause the turbocharger assembly 1121 to continuously compress air for a short period of time and transmit it to the intercooler 1126 and the throttle assembly 1127. At this point, the throttle assembly 1127 is already in a closed state due to receiving a shutdown command. The air near the throttle assembly 1127 cannot be transmitted to the intake manifold 1128, which results in an instantaneous increase in air pressure near the throttle assembly 1127. This adversely affects to the throttle assembly 1127, and in extreme cases, it may even damage the throttle assembly 1127, resulting in engine 11 experiencing leakage and other issues, seriously affecting the service life of the engine 11.

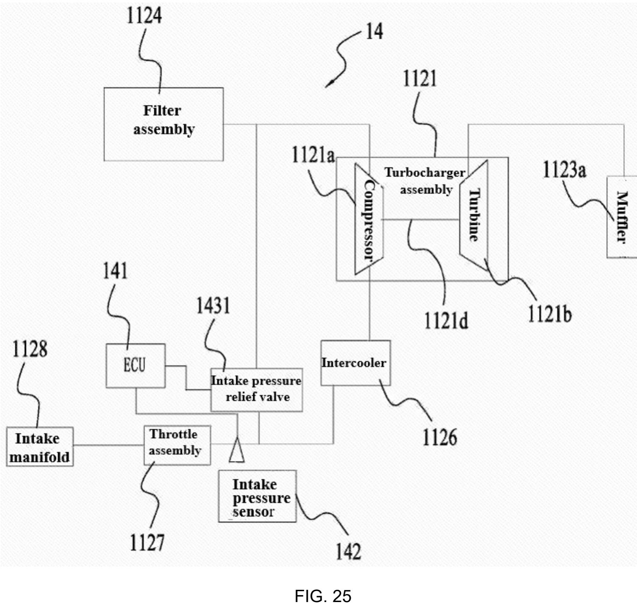

As shown in FIG. 24 and FIG. 25, the engine 11 provided by the present application further includes an intake pressure relief system 14. The intake pressure relief system 14 is configured to relieve pressure when the air pressure value near the throttle assembly 1127 is high, thereby protecting the throttle assembly 1127. Optionally, the intake pressure relief system 14 includes a control device 141, a monitoring device 142, and an actuator 143. The monitoring device 142 is configured to monitor air pressure at a position of the throttle assembly 1127 that is adjacent to the intercooler 1126. When the air pressure near the throttle assembly 1127 is greater than or equal to a preset value, the monitoring device 142 transmits the pressure signal value to the control device 141. The control device 141 controls the actuator 143 to release pressure, thereby reducing the air pressure in the pipeline attached to the throttle assembly 1127 and avoiding air pressure damage to the structure of the throttle assembly 1127. When the air pressure near the throttle assembly 1127 is lower than the preset value, the monitoring device 142 transmits the pressure signal value to the control device 141, and the control device 141 controls the actuator 143 to stop pressure relief, thereby ensuring the air pressure entering the intake manifold 1128. As an embodiment, the air conduit assembly 112a (refer to FIG. 2) includes a first intake pipe 112aa and a second intake pipe 112ae. The first intake pipe 112aa connects the turbocharger assembly 1121 and the filter assembly 1124. The second intake pipe 112ae connects the intercooler 1126 and the throttle assembly 1127. One end of the actuator 143 is arranged on the first intake pipe 112aa, and the other end of the actuator 143 is arranged on the second intake pipe 112ae. The throttle assembly 1127 has an opening state and a closed state, when the throttle assembly 1127 is in the opening state, a first pressure differential is defined between the first intake pipe and the second intake pipe. When the throttle assembly is in the closed state, a second pressure differential is defined between the first intake pipe and the second intake pipe, and the second pressure differential is greater than the first pressure differential. The monitoring device 142 is configured as an intake pressure sensor, which is used to monitor air pressure at a position of the throttle assembly 1127 that is adjacent to the intercooler 1126. The actuator 143 includes an intake pressure relief valve 1431, a pressure relief pipe 1432, and a support 1433. The intake pressure relief valve 1431 is fixedly connected to the pressure relief pipe 1432. The support 1433 is positioned between the pressure relief pipe 1432 and the intake manifold 1128 and is used to support the pressure relief pipe 1432. The intake pressure relief valve 1431 is arranged on the second intake pipe 112ae, and the pressure relief pipe 1432 is arranged between the intake pressure relief valve 1431 and the first intake pipe 112aa. The control device 141 is electrically connected to the intake pressure sensor and the intake pressure relief valve 1431, which is used for real-time analysis of the pressure values transmitted from the intake pressure sensor. As an embodiment, the control device 141 further defines another threshold value. When the pressure value transmitted from the intake pressure sensor is greater than or equal to the threshold value, the control device 141 controls the intake pressure relief valve 1431 to open. At this time, the air transmitted from the intercooler 1126 flows out through the intake pressure relief valve 1431 and is further transmitted to the intake assembly 1122 through the pressure relief pipe 1432. At this time, the air pressure near the throttle assembly 1127 rapidly decreases until the pressure value received by the control device 141 is less than the above threshold value, and the control device 141 controls the intake pressure relief valve 1431 to close. At this time, the air output from the intercooler 1126 continues to be output to the throttle assembly 1127, and is transmitted to the intake manifold 1128 by the throttle assembly 1127. As an embodiment, the control device 141 is integrated into an ECU, which can uniformly control the operating status of the entire vehicle, thereby improving the coordination between various components and increasing the service life of the entire vehicle.

As an embodiment, the first intake pipe 112aa includes a first fastener 112ab, a second fastener 112ac, and a load-bearing member 112ad. The first fastener 112ab is at least arranged between the load-bearing member 112ad and the intercooler 1126, and one end of the load-bearing member 112ad is connected to the intercooler 1126 means of the first fastener 112ab. The second fastener 112ac is at least partially disposed between the load-bearing member 112ad and the throttle assembly 1127, and the other end of the load-bearing member 112ad is connected to the throttle assembly 1127 by means of the second fastener 112ac. The first fastener 112ab and the second fastener 112ac are made of a first material, and the load-bearing member 112ad is made of a second material. Optionally, the first material is configured as a flexible material, and the second material is configured as a rigid material, where the first material may be a rubber and the second material may be a hard plastic. This can buffer the impact pressure generated when air enters the air conduit assembly 112a from the intercooler 1126, and ensure the sealing of the connection between the intercooler 1126 and the air conduit assembly 112a, thereby reducing air pressure loss and preventing gas leakage, ensuring the sealing of the valve train 112. The load-bearing member 112ad and the first fastener 112ab are connected by means of a clamp, and the load-bearing member 112ad and the second fastener 112ac are connected by means of a clamp. This arrangement improves the sealing performance of the air conduit assembly 112a and facilitates the installation and removal of the load-bearing member 112ad, the first fastener 112ab, and the second fastener 112ac, thereby saving assembly and maintenance costs. The load-bearing member 112ad is configured as a rigid material, where the load-bearing member 112ad may be a hard plastic. This method facilitates the support of the intake pressure sensor and pressure relief valve by the load-bearing member 112ad, and the strength of the load-bearing member 112ad can withstand the air pressure in the air conduit assembly 112a, meeting the support requirements of the intake pressure sensor and the intake pressure relief valve 1431.

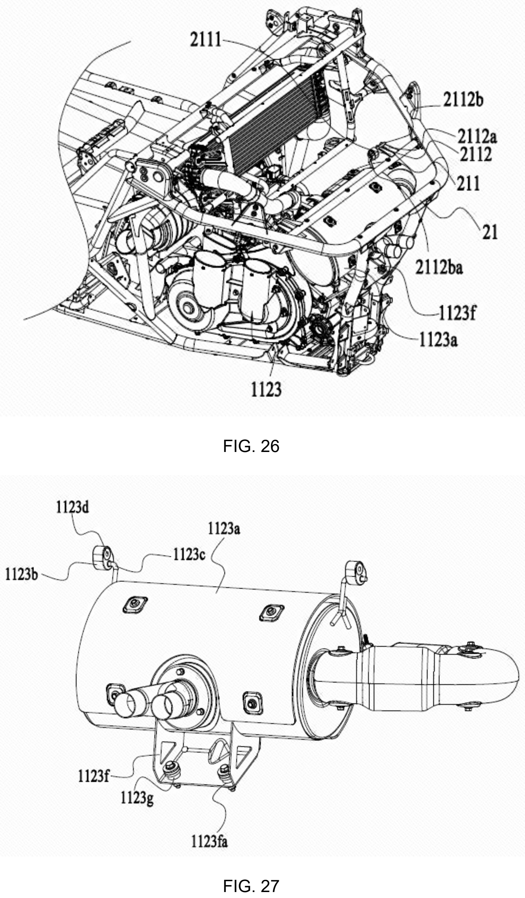

As shown in FIG. 26 to FIG. 28, the exhaust assembly 1123 includes a muffler 1123a and an exhaust pipe 1123e. The muffler 1123a is fixedly connected to the frame 21, and the exhaust pipe 1123e is provided on the muffler 1123a. One end of the muffler 1123a is in fluid communication with the combustion chamber, and the other end of the muffler 1123a is in fluid communication with the external space by means of the exhaust pipe 1123e. The muffler 1123a includes a first support rod 1123b, which is arranged on both sides of the muffler 1123a and fixedly connected to the muffler 1123a. The first support rod 1123b includes a first connection portion 1123c and a first insertion portion 1123d, with the first connection part 1123c extending along the first predetermined direction and the first insertion part 1123d extending along the second predetermined direction. A hanging assembly 211 is mounted on the frame 21, which includes a hanging mechanism 2111 and a second support rod 2112. The second support rod 2112 is connected to the frame 21, and the second support rod 2112 includes a second connection portion 2112a and a second insertion portion 2112b. The second insertion portion 2112b extends along a third predetermined direction, and the second connection portion 2112a extends along the fourth predetermined direction. The first insertion portion 1123d and the second insertion portion 2112b are connected by means of a hanging mechanism 2111. Optionally, a first limiting portion is provided at one end of the first insertion portion 1123d away from the first connection portion 1123c, and a second limiting portion 2112ba is provided at one end of the second insertion portion 2112b away from the second connection portion 2112a. The first limit portion and the second limit portion 2112ba are both configured as a circular truncated cone or a cone, and the radius of the first limit portion gradually decreases from the end of the first limit portion near the first insertion portion 1123d to the end of the first limit portion away from the first insertion portion 1123d. The radius of the second limiting portion 2112ba gradually decreases from the end near the second insertion portion 2112b to the end far away from the second insertion portion 2112b. The hanging mechanism 2111 defines an insertion hole, and the insertion portion 1123d is at least partially inserted into the insertion hole. The first limiting portion can prevent the first insertion portion 1123d from falling off from the hanging mechanism 2111. The second insertion portion 2112b is at least partially inserted into the insertion hole, and the second limiting portion 2112ba can prevent the second insertion portion 2112b from falling off from the hanging mechanism 2111. The hanging mechanism 2111 may be configured as a rubber. Through the above, the hanging mechanism 2111 can buffer the vibration between the frame 21 and the muffler 1123a, and the connection between the muffler 1123a and the frame 21 is simple and convenient. At the same time, the first support rod 1123b and the second support rod 2112 can slide relative to the hanging mechanism 2111, so that the installation position of the muffler 1123a can be adjusted according to the specific structure of the all-terrain vehicle 200, thereby making the muffler 1123a more versatile. The muffler 1123a further includes a bracket 1123f, and the lower end of the muffler 1123a is fixedly connected to the frame 21 by means of the bracket 1123f. Optionally, the bracket 1123f is provided with a first connection hole 1123fa, and the frame 21 is provided with a second connection hole. A fastener are threaded through the first connection hole 1123fa and the second connection hole to securely connect the bracket 1123f and the frame 21. In the present application, the fastener are configured as bolts and nuts, and the muffler 1123a further includes a buffer structure 1123g, which is at least partially disposed between the fastener and the bracket 1123f, and at least partially located between the fastener and the frame 21. The buffer structure 1123g is configured as rubber, and the buffer structure 1123g is set as an "I" - shaped structure, which includes a first portion, a second portion, and a third portion. The second portion is arranged in the first connection hole 1123fa and the second connection hole and surrounds the fastener. The upper end of the second portion extends towards the side away from the first connection hole 1123fa to define the first portion, which is arranged between the bracket 1123f and the fastener. The lower end of the second portion extends towards the side away from the second connection hole to define the third portion, which is arranged between the frame 21 and the fastener. This increases the contact area between the fasteners, the frame 21, and the bracket 1123f, thereby improving the buffering performance of the buffering structure 1123g. At the same time, it can also reduce the wear between fasteners, the frame 21, and the bracket 1123f, thereby reducing maintenance costs. As an optional embodiment, the first portion, the second portion, and the third portion are integrally formed to facilitate the manufacturing of the buffer structure 1123g and save manufacturing costs. Of course, the first portion, the second portion, and the third portion can also be manufactured separately to facilitate the connection between the bracket 1123f and the frame 21.

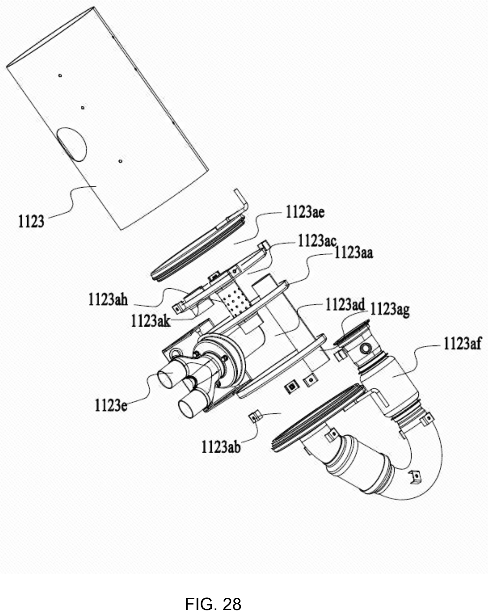

As shown in FIG. 28, further, a plurality of partitions 1123aa is provided inside the muffler 1123a, which divides the muffler 1123a into a first inner cavity 1123ab, a second inner cavity 1123ac, a third inner cavity 1123ad, and a fourth inner cavity 1123ae. The thickness of partitions 1123aa is greater than or equal to 1 mm and less than or equal to 2 mm. From the right end of muffler 1123a to the left end of muffler 1123a, the first inner cavity 1123ab, the second inner cavity 1123ac, the third inner cavity 1123ad, and the fourth inner cavity 1123ae are arranged in sequence inside the muffler 1123a. A ratio of the width of the first inner cavity 1123ab to the width of the second inner cavity 1123ac along the extension direction of the axis of the muffler 1123a is greater than or equal to 0.6 and less than or equal to 1.2. A ratio of the width of the second inner cavity 1123ac to the width of the third inner cavity 1123ad is greater than or equal to 1.2 and less than or equal to 1.8. A ratio of the width of the third cavity 1123ad to the width of the fourth cavity 1123ae is greater than or equal to 0.6 and less than or equal to 1.2. The muffler 1123a further includes a first connecting pipe 1123af, a second connecting pipe 1123ag, a third connecting pipe 1123ah, and a fourth connecting pipe 1123ak. One end of the first inner chamber 1123ab is in fluid communication with the combustion chamber by means of the first connecting pipe 1123af, and the other end of the first inner chamber 1123ab is in fluid communication with one end of the third inner chamber 1123ad by means of the second connecting pipe 1123ag. The other end of the third inner cavity 1123ad is in fluid communication with one end of the fourth inner cavity 1123ae by the third connecting pipe 1123ah, and the other end of the fourth inner cavity 1123ae is in fluid communication with the second inner cavity 1123ac by the fourth connecting pipe 1123ak. The exhaust pipe 1123e is in fluid communication with the second inner cavity 1123ac with the external space. The radius of the first connecting pipe 1123af is greater than or equal to 65 mm and less than or equal to 70 mm, and the thickness of the first connecting pipe 1123af is greater than or equal to 1 mm and less than or equal to 1.5 mm. The radius of the second connecting pipe 1123ag is greater than or equal to 45 mm and less than or equal to 50 mm, and the thickness of the second connecting pipe 1123ag is greater than or equal to 1 mm and less than or equal to 1.5 mm. The radius of the third connecting pipe 1123ah is greater than or equal to 45 mm and less than or equal to 50 mm, and the thickness of the third connecting pipe 1123ah is greater than or equal to 1 mm and less than or equal to 1.5 mm. The radius of the fourth connecting pipe 1123ak is greater than or equal to 45 mm and less than or equal to 50 mm, and the thickness of the fourth connecting pipe 1123ak is greater than or equal to 1 mm and less than or equal to 1.5 mm. The radius of the exhaust pipe 1123e is greater than or equal to 50 mm and less than or equal to 70 mm. The fourth connecting pipe 1123ak includes a middle portion positioned in the third inner cavity 1123ad, the middle portion defines an pore. The air in the fourth connecting pipe 1123ak can flow into the third inner cavity 1123ad through the pore. The number of pores is greater than or equal to 30 and less than or equal to 50, and the radius of pores is greater than or equal to 2 mm and less than or equal to 5 mm. This can improve the noise control of the all-terrain vehicle 200, thereby reducing the exhaust noise of the all-terrain vehicle 200 while also improving the noise quality, making the all-terrain vehicle 200 have a more balanced performance. Moreover, this ensures smooth exhaust of the all-terrain vehicle 200, reduces the power loss of the engine 11, and ensures the power and fuel economy of the engine 11. As an optional embodiment, the thickness of partition 1123aa may be 1 mm, 1.2 mm, 1.4 mm, 1.6 mm, 1.8 mm, or 2 mm, etc. The width of the first inner cavity 1123ab may be 125 mm, 130 mm, 135 mm, 140 mm, or 145 mm along the extension direction of the axis of the muffler 1123a. The width of the second inner cavity 1123ac may be 130 mm, 135 mm, 140 mm, 145 mm, or 150 mm, or the like. The width of the third inner cavity 1123ad may be 90 mm, 95 mm, 100 mm, 105 mm, or 110 mm, or the like. The width of the fourth inner cavity 1123ae may be 90 mm, 95 mm, 100 mm, 105 mm, or 110 mm, etc. The radius of the first connecting pipe 1123af may be 65 mm, 66 mm, 67 mm, 68 mm, 69 mm, or the like, and the thickness of the first connecting pipe 1123af may be 1 mm, 1.1 mm, 1.2 mm, 1.3 mm, 1.4 mm, 1.5 mm, or the like. The radius of the second connecting pipe 1123ag may be 45 mm, 46 mm, 47 mm, 48 mm, 49 mm, or the like, and the thickness of the second connecting pipe 1123ag may be 1 mm, 1.1 mm, 1.2 mm, 1.3 mm, 1.4 mm, 1.5 mm, or the like. The radius of the third connecting pipe 1123ah may be 45 mm, 46 mm, 47 mm, 48 mm, 49 mm, or the like, and the thickness of the third connecting pipe 1123ah may be 1 mm, 1.1 mm, 1.2 mm, 1.3 mm, 1.4 mm, 1.5 mm, or the like. The radius of the fourth connecting pipe 1123ak may be 45 mm, 46 mm, 47 mm, 48 mm, 49 mm, or the like, and the thickness of the fourth connecting pipe 1123ak may be 1 mm, 1.1 mm, 1.2 mm, 1.3 mm, 1.4 mm, 1.5mm, or the like. The radius of the exhaust pipe 1123e may be 50 mm, 55 mm, 60 mm, 65 mm, 70 mm, or the like. The number of pores may be 30, 35, 40, 45, or 50, and the radius of pores may be 2 mm, 3 mm, 4 mm, or 5 mm.

It should be understood that for those skilled in the art, improvements or transformations can be made based on the above description, and all such improvements and transformations should fall within the scope of protection of the claims attached to this invention.

## Claims

1. An all-terrain vehicle comprising
a frame;
a vehicle body cover at least partially arranged on the frame;
a prime mover assembly comprising an engine comprising an intake assembly, a first intake pipe, a second intake pipe, a turbocharger assembly, an intercooler, and a throttle assembly, the throttle assembly being connected to the intake assembly, the turbocharger assembly being connected to the intake assembly, the first intake pipe being connected to the turbocharger assembly, the turbocharger assembly being connected to the intercooler, and the intercooler being connected to the throttle assembly by the second intake pipe;
a wheel system connected to the prime mover assembly in a transmission mode;
wherein the intercooler is arranged between the throttle assembly and the turbocharger assembly, and a mounting plane parallel to a horizontal plane is defined between the engine and the all-terrain vehicle, the intercooler is inclined relative to the mounting plane at an angle defined between the intercooler and the mounting plane greater than or equal to 80 degrees and less than or equal to 90 degrees;
the engine further comprises an intake pressure relief system, the intake pressure relief system comprising a control device, a monitoring device, and an actuator, wherein one end of the actuator is connected to the second intake pipe, and the other end of the actuator is connected to the first intake pipe, the monitoring device is used to monitor the air pressure value near the throttle assembly and to transmit the air pressure value to the control device, the control device presets a threshold value, when the air pressure value is greater than or equal to the threshold value, the control device controls the actuator arranged on the first intake pipe and the second intake pipe to be connected; when the air pressure value is less than the threshold value, the control device controls the actuator arranged on the first intake pipe and the second intake pipe to be closed.

2. The all-terrain vehicle of claim 1, wherein a preset plane of the intercooler is oriented towards the front direction of the all-terrain vehicle, and an angle defined between the preset plane and the mounting plane is 85 degrees.

3. The all-terrain vehicle of claim 1, wherein the engine further comprises an intake manifold and an exhaust manifold, and the turbocharger assembly is arranged between the intake manifold and the exhaust manifold, the turbocharger assembly comprises a compressor, a turbine, and a center housing, the compressor and the turbine are both arranged on the center housing, the compressor is in fluid communication with the intake manifold, the turbine is in fluid communication with the exhaust manifold, and the turbine is integrally formed with the exhaust manifold.

4. The all-terrain vehicle of claim 3, wherein the turbocharger assembly has an intake end positioned adjacent the compressor and an exhaust end positioned adjacent the turbine, and the exhaust manifold is positioned between the intake end and the exhaust end and is in fluid communication with the exhaust end.

5. The all-terrain vehicle of claim 3, wherein the engine further comprises a cylinder block, and the exhaust manifold is provided with a first connection end and a second connection end, a first connection hole is defined on each of the first connection end and the second connection end, a second connection hole matching with the first connection hole is defined on the cylinder head, and the exhaust manifold is connected to the cylinder head by fasteners passing through the first connection hole and the second connection hole.

6. The all-terrain vehicle of claim 5, wherein the exhaust manifold is made of a first material, and the fasteners are made of a second material; the first material has a first specific heat, the second material has a second specific heat different from the first specific heat.

7. The all-terrain vehicle of claim 5, wherein a preset gap is defined between the first connection end and the second connection end, and the preset gap is greater than or equal to 3 mm and less than or equal to 5 mm.

8. The all-terrain vehicle of claim 5, wherein a preset gap is defined between the first connection end and the second connection end, and the preset gap is greater than or equal to 3.5 mm and less than or equal to 4.5 mm.

9. The all-terrain vehicle of claim 5, wherein the exhaust manifold is further provided with a third connection end, a predetermined gap is defined between each of the first connection end, the second connection end, and the third connection end, and the predetermined gap is greater than or equal to 3.8 mm and less than or equal to 4.2 mm.

10. The all-terrain vehicle of claim 1, further comprising an ECU, and the control device is integrated into the ECU.

11. The all-terrain vehicle of claim 1, wherein the monitoring device is an intake pressure sensor.

12. The all-terrain vehicle of claim 1, wherein the actuator comprises an intake pressure relief valve and a pressure relief pipe, and the intake pressure relief valve is fixedly connected to the pressure relief pipe; the intake pressure relief valve is arranged on the second intake pipe; the engine further comprises an intake manifold, and the actuator further comprises a support, the support is arranged between the pressure relief pipe and the intake manifold and used to support the pressure relief pipe.

13. The all-terrain vehicle of claim 1, wherein the throttle assembly has an opening state and a closed state, when the throttle assembly is in the opening state, a first pressure differential is defined between the first intake pipe and the second intake pipe; when the throttle assembly is in the closed state, a second pressure differential is defined between the first intake pipe and the second intake pipe, and the second pressure differential is greater than the first pressure differential.

14. The all-terrain vehicle of claim 1, further comprising an ECU, the throttle assembly has an opening state and a closed state, and the turbocharger assembly has a start state and a stop state, when the ECU controls the throttle assembly to be closed, the ECU also controls the turbocharger assembly to stop, and the stop time of the turbocharger assembly is greater than the stop time of the throttle assembly.

15. The all-terrain vehicle of claim 1, wherein the turbocharger assembly comprises a compressor, a turbine, a center housing, and a transmission shaft, the compressor and the turbine are both mounted on the center housing, and the transmission shaft connects the compressor and the turbine.

16. The all-terrain vehicle of claim 1, wherein the turbocharger assembly comprises an intake end and an exhaust end, wherein the intake end is not directly in fluid communication with the exhaust end on the turbocharger assembly.

17. The all-terrain vehicle of claim 1, wherein the engine further comprises an oil cooler in fluid communication with the turbocharger assembly; the oil cooler comprises a cooling structure and a guide structure, the cooling structure extends substantially along a predetermined direction, the guide structure is at least partially recessed towards one side adjacent to the cooling structure to define a first guide portion, a inner wall of the first guide portion on the side away from the first guide portion extends substantially in a first plane, a second plane is defined as being perpendicular to an extension direction of the cooling mechanism, and an angle defined between the first plane and the second plane is greater than 0 degree to less than 90 degrees.

18. The all-terrain vehicle of claim 17, wherein the angle defined between the first plane and the second plane is greater than 5 degree to less than 10 degrees.

19. The all-terrain vehicle of claim 17, wherein the angle defined between the first plane and the second plane is greater than 6 degree to less than 9 degrees.

20. The all-terrain vehicle of claim 17, wherein the angle between the first plane and the second plane is greater than or equal to 7 degrees and less than or equal to 8 degrees.

21. The all-terrain vehicle of claim 17, wherein the guide structure comprises a second guide portion at the upper end of the first guide portion, the upper end of the first guide portion protrudes in a direction away from a connection portion to define the second guide portion.

22. The all-terrain vehicle of claim 21, wherein the cooling mechanism further comprises a first portion and a second portion, wherein the first portion is arranged at the upper end of the cooling structure, and the second portion is arranged below the first portion.

23. The all-terrain vehicle of claim 22, wherein the cooling mechanism comprises several cooling pipes, the number of cooling pipes in the first portion is defined as M1, the number of cooling pipes in the second portion is defined as M2, and a ratio of M2 to M1 is greater than or equal to 4 and less than or equal to 7.

24. The all-terrain vehicle of claim 23, wherein the ratio of M2 to M1 is greater than or equal to 5 and less than or equal to 6.

25. The all-terrain vehicle of claim 21, wherein the guide structure comprises a transition portion, positioned between the first guide portion and the second guide portion; the transition portion is designed as an arc shape.

26. The all-terrain vehicle of claim 1, wherein the engine comprises a valve train, and the valve train comprises the turbocharger assembly and the oil cooler; the valve train comprises an air conduit assembly arranged between the oil cooler and the throttle assembly, wherein the air conduit assembly comprises a first fastener, a second fastener, and a load-bearing member, one end of the load-bearing member is connected to the oil cooler by the first fastener, and the other end of the load-bearing member is connected to the throttle assembly by the second fastener, both the first fastener and the second fastener are made of a first material, and the load-bearing member is made of a second material; the first material is a flexible material, and the second material is a rigid material.

27. The all-terrain vehicle of claim 26, wherein a pressure and/or temperature sensor for monitoring the air in the air conduit assembly is provided on the load-bearing member.

28. The all-terrain vehicle of claim 26, wherein a safety device is provided on the load-bearing member, and when the pressure of the air in the air conduit assembly is greater than or equal to a preset pressure, the safety device is capable of discharging the air in the air conduit assembly; the safety device is designed as a pressure relief valve.

29. The all-terrain vehicle of claim 26, wherein the load-bearing member is connected to the first fastener by a clamp; and the load-bearing member is connected to the second fastener by a clamp.

30. An all-terrain vehicle comprising
a frame;
a vehicle body cover at least partially arranged on the frame;
a prime mover assembly comprising an engine, the engine comprising an intake assembly and a throttle assembly connected to the intake assembly, and further comprising a turbocharger assembly connected to the intake assembly; and
a wheel system connected to the engine in a transmission mode;
wherein the engine further comprises an intercooler, and the intercooler is arranged between the throttle assembly and the turbocharger assembly, and a mounting plane parallel to a horizontal plane is defined between the engine and the all-terrain vehicle, the intercooler is inclined relative to the mounting plane at an angle defined between the intercooler and the mounting plane greater than or equal to 80 degrees and less than or equal to 90 degrees.

31. The all-terrain vehicle of claim 30, wherein a preset plane of the intercooler is oriented towards the front direction of the all-terrain vehicle, and an angle defined between the preset plane and the mounting plane is 85 degrees.

32. The all-terrain vehicle of claim 30, wherein the engine further comprises an intake manifold and an exhaust manifold, and the turbocharger assembly is arranged between the intake manifold and the exhaust manifold, the turbocharger assembly comprises a compressor, a turbine, and a center housing, the compressor and the turbine are both arranged on the center housing, the compressor is in fluid communication with the intake manifold, the turbine is in fluid communication with the exhaust manifold, and the turbine is integrally formed with the exhaust manifold.

33. The all-terrain vehicle of claim 32, wherein the turbocharger assembly has an intake end positioned adjacent the compressor and an exhaust end positioned adjacent the turbine, and the exhaust manifold is positioned between the intake end and the exhaust end and is in fluid communication with the exhaust end.

34. The all-terrain vehicle of claim 32, wherein the engine further comprises a cylinder block, and the exhaust manifold is provided with a first connection end and a second connection end, a first connection hole is defined on each of the first connection end and the second connection end, a second connection hole matching with the first connection hole is defined on the cylinder head, and the exhaust manifold is connected to the cylinder head by fasteners passing through the first connection hole and the second connection hole.

35. The all-terrain vehicle of claim 34, wherein the exhaust manifold is made of a first material, and the fasteners are made of a second material; the first material has a first specific heat, the second material has a second specific heat different from the second specific heat.

36. The all-terrain vehicle of claim 34, wherein a preset gap is defined between the first connection end and the second connection end, and the preset gap is greater than or equal to 3 mm and less than or equal to 5 mm.

37. The all-terrain vehicle of claim 34, wherein a preset gap is defined between the first connection end and the second connection end, and the preset gap is greater than or equal to 3.5 mm and less than or equal to 4.5 mm.

38. The all-terrain vehicle of claim 34, wherein the exhaust manifold is further provided with a third connection end, a predetermined gap is defined between the first connection end, the second connection end, and the third connection end, and the predetermined gap is greater than or equal to 3.8 mm and less than or equal to 4.2 mm.

39. The all-terrain vehicle of claim 30, wherein the engine comprises a cylinder block and a knock sensor mounted on the cylinder block; the cylinder block comprises a first combustion chamber, a second combustion chamber, and a third combustion chamber, wherein the second combustion chamber is positioned between the first combustion chamber and the third combustion chamber, and a mounting seat is provided on the second combustion chamber, and the knock sensor is mounted on the mounting seat.

40. The all-terrain vehicle of claim 39, wherein the cylinder block extends at least partially towards the side away from the second combustion chamber to define the mounting seat.

41. The all-terrain vehicle of claim 39, wherein the mounting seat is arranged on the side of the cylinder block adjacent to the intake end.

42. The all-terrain vehicle of claim 39, wherein the temperature at the mounting seat is lower than the temperature on the other side of the cylinder block away from the mounting seat.

43. The all-terrain vehicle of claim 39, wherein the knock sensor is electrically connected to the ECU, wherein the knock sensor is configured to transmit the electrical signal to the ECU.

44. The all-terrain vehicle of claim 43, wherein the ECU is configured with a predetermined threshold, and the ECU controls a ignition mechanism to delay ignition when the electrical signal transmitted from the knock sensor to the ECU is greater than the predetermined threshold.

45. The all-terrain vehicle of claim 43, wherein the ECU is configured with a predetermined threshold, and the ECU controls a ignition mechanism to perform normal ignition when the electrical signal received from the knock sensor is less than or equal to the predetermined threshold.

46. The all-terrain vehicle of claim 30, wherein the engine comprises a cylinder block, an ignition mechanism, and a knock sensor mounted on the cylinder block; the cylinder block comprises a first combustion chamber, a third combustion chamber, and a second combustion chamber arranged between the first combustion chamber and the third combustion chamber, and the knock sensor is positioned on the outer side the second combustion chamber, and the all-terrain vehicle further comprises an ECU, the ECU is electrically connected to the knock sensor, the knock sensor acquires a vibration wave from the cylinder block and converts the vibration wave into an electrical signal transmitted to the ECU, whereby the ECU controls an ignition timing of the ignition mechanism based on the electrical signal from the knock sensor.

47. The all-terrain vehicle of claim 46, wherein the ECU is configured with a predetermined threshold, and the ECU controls a ignition mechanism to delay ignition when the electrical signal transmitted from the knock sensor to the ECU is greater than the predetermined threshold.

48. The all-terrain vehicle of claim 46, wherein the ECU is configured with a predetermined threshold, and the ECU controls a ignition mechanism to perform normal ignition when the electrical signal received from the knock sensor is less than or equal to the predetermined threshold.

49. The all-terrain vehicle of claim 30, wherein the engine comprises a cylinder block, the cylinder block comprises a cylinder body water jacket and defines a cylinder hole, and a heat exchange medium is provided in the cylinder body water jacket; the cylinder water jacket defines a first path and a second path, and a pressure difference is defined between the heat exchange mediums in the first path and in the second path, and a heat dissipation channel is defined between adjacent cylinder holes to be in fluid communication with the first path and the second path.

50. The all-terrain vehicle of claim 49, wherein a slot width of the heat dissipation channel is greater than or equal to 1 mm and less than or equal to 2 mm.

51. The all-terrain vehicle of claim 49, wherein a slot depth of the heat dissipation channel is greater than or equal to 3 mm and less than or equal to 7 mm.

52. The all-terrain vehicle of claim 49, wherein the cylinder block defines an inlet and an outlet, and the heat exchange medium flows in from the inlet and flows out from the outlet after passing through the first path and the second path.

53. The all-terrain vehicle of claim 49, wherein the cylinder block has a plurality of combustion chambers, which divide at least the first path and the second path.

54. The all-terrain vehicle of claim 30, wherein the intake assembly comprises an air-guiding pipe for intaking air and a wavelength pipe for reducing noise; the air-guiding pipe is integrally formed with the wavelength pipe, and the air-guiding pipe is in communication with one end of the wavelength pipe and the external space, respectively, the other end of the wavelength pipe away from the wavelength pipe is closed.

55. The all-terrain vehicle of claim 54, wherein the wavelength pipe comprises a first portion and a second portion, and the extension direction of the first portion is substantially perpendicular to the extension direction of the second portion; a transition structure is provided between the first portion and the second portion; the transition structure is designed as an arc shape.

56. The all-terrain vehicle of claim 54, wherein the air-guiding pipe is provided with an air inlet and a filter valve, the air inlet is provided at one end of the air-guiding pipe, and the filter valve is provided at the other end of the air intake pipe; the filter valve is mounted on one end of the wavelength pipe away from the air inlet; a reinforcement structure is provided between the air inlet and the filter valve, and the reinforcement structure extends substantially along the direction from the air inlet to the filter valve.

57. The all-terrain vehicle of claim 56, wherein an air-guide structure is provided in the air-guiding pipe, and the air-guide structure extends substantially along a direction from the filter valve to a reinforcement structure; a gap is defined between the air-guide structure and the reinforcing structure; and the wavelength pipe and the filter valve are positioned on the same side.

58. The all-terrain vehicle of claim 30, wherein the intake assembly comprises a guide pipe for intaking air; the air-guiding pipe is provided with a reinforcement structure, a filtering valve, and an air-guide structure, the reinforcement structure, the filter valve, and the air-guide structure divide the air-guiding pipe into an input space, a filtering space, and an output space, the input space is in fluid communication with the outside, and the output space is in fluid communication with the oil filter, the air in the input space is guided to the filter space through the reinforcement structure and the air-guide structure, and the filtering space is in fluid communication with the filter valve.

59. The all-terrain vehicle of claim 58, wherein the air-guiding pipe is provided with an inlet, which is defined at one end of the air-guiding pipe, and the filter valve is mounted at the other end of the air-guiding pipe; the reinforcement structure is arranged between the filter valve and the inlet; the reinforcement structure extends substantially in the direction from the inlet to the filter valve; the guide structure extends along the direction from the filter valve to the reinforcement structure, and a gap is defined between the guide structure and the reinforcement mechanism to in fluid communication with the filter space and the output space.

60. The all-terrain vehicle of claim 59, wherein a wavelength pipe is arranged on the upper side of the filter valve, and the wavelength pipe and the filter valve are positioned on the same side relative to the air-guide structure; the air-guiding pipe is integrally formed with the wavelength pipe, and the air-guiding pipe is in communication with one end of the wavelength pipe and the external space, respectively, the other end of the wavelength pipe away from the filter valve is closed; the wavelength pipe comprises a first portion and a second portion, and the extension direction of the first portion is substantially perpendicular to the extension direction of the second portion; a transition structure is provided between the first portion and the second portion; the transition structure is designed as an arc shape.

61. The all-terrain vehicle of claim 30, wherein the engine further comprises an oil cooler in fluid communication with the turbocharger assembly; the oil cooler comprises a cooling structure and a guide structure, the cooling structure extends substantially along a predetermined direction, the guide structure is at least partially recessed towards one side adjacent to the cooling structure to define a first guide portion, a inner wall of the first guide portion on the side away from the first guide portion extends substantially in a first plane, a second plane is defined as being perpendicular to an extension direction of the cooling mechanism, and an angle defined between the first plane and the second plane is greater than 0 degree to less than 90 degrees.

62. The all-terrain vehicle of claim 61, wherein the angle defined between the first plane and the second plane is greater than 5 degree to less than 10 degrees.

63. The all-terrain vehicle of claim 61, wherein the angle defined between the first plane and the second plane is greater than 6 degree to less than 9 degrees.

64. The all-terrain vehicle of claim 61, wherein the angle between the first plane and the second plane is greater than or equal to 7 degrees and less than or equal to 8 degrees.

65. The all-terrain vehicle of claim 61, wherein the guide structure comprises a second guide portion at the upper end of the first guide portion, the upper end of the first guide portion protrudes in a direction away from a connection portion to define the second guide portion.

66. The all-terrain vehicle of claim 65, wherein the cooling mechanism further comprises a first portion and a second portion, wherein the first portion is arranged at the upper end of the cooling structure, and the second portion is arranged below the first portion.

67. The all-terrain vehicle of claim 66, wherein the cooling mechanism comprises several cooling pipes, the number of cooling pipes in the first portion is defined as M1, the number of cooling pipes in the second portion is defined as M2, and a ratio of M2 to M1 is greater than or equal to 4 and less than or equal to 7.

68. The all-terrain vehicle of claim 67, wherein the ratio of M2 to M1 is greater than or equal to 5 and less than or equal to 6.

69. The all-terrain vehicle of claim 65, wherein the guide structure comprises a transition portion, positioned between the first guide portion and the second guide portion; the transition portion is designed as an arc shape.

70. An all-terrain vehicle comprising
a frame;
a vehicle body cover at least partially arranged on the frame;
a prime mover assembly comprising an engine, wherein the engine comprises an intake assembly, a throttle assembly, a turbocharger assembly, and an intake manifold, the throttle assembly being connected to the intake assembly, the turbocharger assembly being connected to the intake assembly, the intake manifold being connected to the turbocharger assembly,
a wheel system connected to the engine in a transmission mode;
wherein the engine further comprises an intercooler, and the intercooler is arranged between the throttle assembly and the turbocharger assembly, and a mounting plane parallel to a horizontal plane is defined between the engine and the all-terrain vehicle, the intercooler is inclined relative to the mounting plane at an angle defined between the intercooler and the mounting plane greater than or equal to 80 degrees and less than or equal to 90 degrees;
the intake manifold comprises an intake end, an exhaust end, and a plenum chamber, the plenum chamber comprises an extension portion and is at least partially positioned between the intake end and the exhaust end, the exhaust end defines a first exhaust port, a second exhaust port, and a third exhaust port, the second exhaust port is defined between the first exhaust port and the third exhaust port, the extension portion extends to the end away from the first exhaust port and the third exhaust port.

71. The all-terrain vehicle of claim 70, wherein a preset plane of the intercooler is oriented towards the front direction of the all-terrain vehicle, and an angle defined between the preset plane and the mounting plane is 85 degrees.

72. The all-terrain vehicle of claim 70, wherein the engine further comprises an intake manifold and an exhaust manifold, and the turbocharger assembly is arranged between the intake manifold and the exhaust manifold, the turbocharger assembly comprises a compressor, a turbine, and a center housing, the compressor and the turbine are both arranged on the center housing, the compressor is in fluid communication with the intake manifold, the turbine is in fluid communication with the exhaust manifold, and the turbine is integrally formed with the exhaust manifold.

73. The all-terrain vehicle of claim 72, wherein the turbocharger assembly has an intake end positioned adjacent the compressor and an exhaust end positioned adjacent the turbine, and the exhaust manifold is positioned between the intake end and the exhaust end and is in fluid communication with the exhaust end.

74. The all-terrain vehicle of claim 72, wherein the engine further comprises a cylinder block, and the exhaust manifold is provided with a first connection end and a second connection end, a first connection hole is defined on each of the first connection end and the second connection end, a second connection hole matching with the first connection hole is defined on the cylinder head, and the exhaust manifold is connected to the cylinder head by fasteners passing through the first connection hole and the second connection hole.

75. The all-terrain vehicle of claim 74, wherein the exhaust manifold is made of a first material, and the fasteners are made of a second material; the first material has a first specific heat, the second material has a second specific heat different from the first specific heat.

76. The all-terrain vehicle of claim 74, wherein a preset gap is defined between the first connection end and the second connection end, and the preset gap is greater than or equal to 3 mm and less than or equal to 5 mm.

77. The all-terrain vehicle of claim 74, wherein a preset gap is defined between the first connection end and the second connection end, and the preset gap is greater than or equal to 3.5 mm and less than or equal to 4.5 mm.

78. The all-terrain vehicle of claim 74, wherein the exhaust manifold is further provided with a third connection end, a predetermined gap is defined between the first connection end, the second connection end, and the third connection end, and the predetermined gap is greater than or equal to 3.8 mm and less than or equal to 4.2 mm.

79. The all-terrain vehicle of claim 70, wherein the first exhaust port is defined on the side adjacent to the intake end.

80. The all-terrain vehicle of claim 70, wherein an intake direction of the intake end is defined as a first direction, and the plenum chamber extends along the first direction for a predetermined length, the length of the plenum chamber extending along the first direction is greater than the width occupied by the exhaust end along the first direction.

81. The all-terrain vehicle of claim 70, wherein the extension portion has a mount base with a sensor, the sensor is fixedly connected to the mount base; an extension direction of the portion of the sensor in the plenum chamber is defined as a second direction, and an extension direction of the normal of the plenum chamber at the connection between the mount base and the plenum chamber is defined as a third direction, and an angle defined between the second direction and the third direction is greater than or equal to 40 degrees and less than or equal to 50 degrees.

82. The all-terrain vehicle of claim 81, wherein the sensor at least partially passes through the connection between the mount base and the plenum chamber and is at least partially positioned in the plenum chamber.

83. The all-terrain vehicle of claim 70, wherein the outer surface of the intake manifold is provided with a reinforcement structure, the reinforcement structure comprises a first reinforcement structure extending along a first direction and a second reinforcement structure extending along a second direction, a shortest distance between adjacent first reinforcement structures is greater than or equal to 15 mm and less than or equal to 30 mm.

84. The all-terrain vehicle of claim 70, wherein the engine further comprises a carbon canister, and the carbon canister is connected to the intake manifold by a carbon pipe; the engine comprises an intake assembly, an intake manifold, and a cylinder head, one end of the intake manifold is in fluid communication with the cylinder head, and the other end of the intake manifold is in fluid communication with the intake assembly; the intake manifold comprises an intake end, an exhaust end, and a plenum chamber, the plenum chamber is at least partially positioned between the intake end and the exhaust end, the intake end is connected to the intake assembly, and the exhaust end is connected to the cylinder head, a vent hole is defined on the intake end, and the carbon pipe is in fluid communication with the intake manifold by the vent hole.

85. The all-terrain vehicle of claim 84, wherein the plenum chamber comprises an extension portion, the exhaust end defines a first exhaust port, a second exhaust port, and a third exhaust port, the second exhaust port is defined between the first exhaust port and the third exhaust port, the extension portion extends to the end away from the first exhaust port and the third exhaust port.

86. The all-terrain vehicle of claim 84, wherein an intake direction of the intake end is defined as a first direction, and the plenum chamber extends along the first direction for a predetermined length, the length of the plenum chamber extending along the first direction is greater than the width occupied by the exhaust end along the first direction.

87. The all-terrain vehicle of claim 84, wherein a wall thickness of the intake manifold is greater than or equal to 2 mm and less than or equal to 4 mm.

88. The all-terrain vehicle of claim 84, wherein a wall thickness of the intake manifold is greater than or equal to 2.5 mm and less than or equal to 3.5 mm.

89. The all-terrain vehicle of claim 84, wherein a wall thickness of the intake assembly is greater than or equal to 1.5 mm and less than or equal to 3.5 mm.

90. The all-terrain vehicle of claim 84, wherein a wall thickness of the intake assembly is greater than or equal to 2 mm and less than or equal to 3 mm.

91. The all-terrain vehicle of claim 84, wherein the intake manifold is provided with a reinforcement structure, and the reinforcement structure is substantially in a grid shape on the outer surface of the intake manifold.

92. The all-terrain vehicle of claim 84, wherein the intake manifold is a plastic part.

93. The all-terrain vehicle of claim 84, wherein the outer surface of the intake manifold is provided with a reinforcement structure, the reinforcement structure comprises a first reinforcement structure extending along a first direction and a second reinforcement structure extending along a second direction, a shortest distance between adjacent first reinforcement structures is greater than or equal to 15 mm and less than or equal to 30 mm.

94. The all-terrain vehicle of claim 70, wherein the engine comprises a oil delivery mechanism, a pumping oil mechanism, and a housing, wherein a first oil passage in fluid communication with the oil delivery mechanism is defined in the housing; the pumping oil mechanism is in fluid communication with the oil delivery mechanism; the first oil passage includes a first oil delivery passage and a second oil delivery passage, and an extension direction of the first oil delivery passage intersects with/is perpendicular to an extension direction of the second oil delivery passage, a throttle bolt is further provided on the housing, and the first oil delivery passage is in fluid communication with the second oil delivery passage by the throttle bolt; The throttle bolt comprises a protrusion portion, a connecting portion, and a throttle portion, the protrusion portion is positioned at one end away from the throttle portion, and the connecting portion is distributed around the throttle bolt.

95. The all-terrain vehicle of claim 94, wherein both the protrusion portion and the throttling portion are integrally formed with the connecting portion.

96. The all-terrain vehicle of claim 94, wherein the throttle portion comprises a first channel, a second channel, and a third channel, wherein the first channel is in fluid communication with the third channel through the second channel; the second channel has a smaller diameter than the first channel.

97. The all-terrain vehicle of claim 94, wherein the housing comprises a cylinder head and a cylinder block, the first oil passage is defined on the cylinder head, and a second oil passage in fluid communication with the first oil passage is defined on the cylinder block; the cylinder head further defines an intake oil passage, and the second oil delivery passage is in fluid communication with the intake oil passage; the second oil passage is in fluid communication with the oil delivery mechanism.

98. The all-terrain vehicle of claim 94, wherein the housing an opening, the opening is in fluid communication with the second oil delivery channel, the opening is provided with an internal thread structure, and the connecting portion is provided with an external thread structure that cooperates with the internal thread structure.

99. The all-terrain vehicle of claim 94, wherein the protrusion portion is designed as a retaining ring distributed around the throttle bolt.

100. The all-terrain vehicle of claim 94, wherein the inner diameter of the first oil delivery channel is greater than the inner diameter of the second oil delivery channel.

101. The all-terrain vehicle of claim 70, wherein the engine comprises a cylinder block, an intake manifold and an exhaust manifold connected to the cylinder block; the turbocharger assembly is arranged between the intake manifold and the exhaust manifold, the turbocharger assembly comprises a compressor, a turbine, and a center housing, the compressor and the turbine are both arranged on the center housing, the compressor is in fluid communication with the intake manifold, the turbine is in fluid communication with the exhaust manifold, and the turbine is integrally formed with the exhaust manifold.

102. The all-terrain vehicle of claim 101, wherein the turbocharger assembly has an intake end positioned adjacent the compressor and an exhaust end positioned adjacent the turbine, the exhaust manifold is arranged between the intake end and the exhaust end and is in fluid communication with the exhaust end.

103. The all-terrain vehicle of claim 102, wherein the intake end is not directly in fluid communication with the exhaust end on the turbocharger assembly.

104. The all-terrain vehicle of claim 101, wherein the turbocharger assembly further comprises a transmission shaft, and the transmission shaft connects the compressor and the turbine.

105. The all-terrain vehicle of claim 101, wherein the exhaust manifold is provided with a first connection end and a second connection end, a first connection hole is defined on each of the first connection end and the second connection end, a second connection hole matching with the first connection hole is defined on the cylinder block, and the exhaust manifold is connected to the cylinder block by fasteners passing through the first connection hole and the second connection hole.

106. The all-terrain vehicle of claim 105, wherein the exhaust manifold is made of a first material, and the fasteners are made of a second material; the first material has a first specific heat, the second material has a second specific heat different from the first specific heat.

107. The all-terrain vehicle of claim 105, wherein a preset gap is defined between the first connection end and the second connection end, and the preset gap is greater than or equal to 3 mm and less than or equal to 5 mm.

108. The all-terrain vehicle of claim 105, wherein a preset gap is defined between the first connection end and the second connection end, and the preset gap is greater than or equal to 3.5 mm and less than or equal to 4.5 mm.

109. The all-terrain vehicle of claim 105, wherein the exhaust manifold is further provided with a third connection end, a predetermined gap is defined between the first connection end, the second connection end, and the third connection end, and the predetermined gap is greater than or equal to 3.8 mm and less than or equal to 4.2 mm.
